**Europäisches Patentamt**

**European Patent Office**

**Office européen des brevets**

(19)

(11) Veröffentlichungsnummer : **0 446 356 B1**

# EUROPÄISCHE PATENTSCHRIFT

(12)

(45) Veröffentlichungstag der Patentschrift :
**02.03.94 Patentblatt 94/09**

(51) Int. Cl.$^5$ : **F03B 13/18**

(21) Anmeldenummer : **90900419.4**

(22) Anmeldetag : **30.11.89**

(86) Internationale Anmeldenummer :
**PCT/SU89/00303**

(87) Internationale Veröffentlichungsnummer :
**WO 90/06442 14.06.90 Gazette 90/14**

(54) **WELLENENERGIE-UMWANDLUNGSVERFAHREN UND -VORRICHTUNG.**

(30) Priorität : **30.11.88 SU 4611149**
**06.02.89 SU 4647033**
**20.06.89 SU 4700715**

(43) Veröffentlichungstag der Anmeldung :
**18.09.91 Patentblatt 91/38**

(45) Bekanntmachung des Hinweises auf die
Patenterteilung :
**02.03.94 Patentblatt 94/09**

(84) Benannte Vertragsstaaten :
**DE FR GB IT SE**

(56) Entgegenhaltungen :
**SU-A- 1 285 183**
**SU-A- 1 320 497**
**SU-A- 1 363 393**
**Keine Entgegenhaltungen.**

(73) Patentinhaber : **VALIEV, Baidar Garifovich**
**pr. Makeeva, 41-17, Chelyabinskaya obl.**
**Miass, 456322 (SU)**
Patentinhaber : **KOLP, Albert Yakovlevich**
**ul. Zhukovskogo, 12-20, Chelyabinskaya obl.**
**Miass, 456324 (SU)**

Patentinhaber : **MARIINA, Nailya Baidarovna**
**ul. Molodogvardeiskaya, 8a-4, Sverdlovskaya**
**obl.**
**Kamyshlov, 623530 (SU)**
Patentinhaber : **KOLP, Yakov Albertovich**
**MFTI, obschezhitie No.3-111, Moskovskaya**
**obl.**
**Dolgroprudny, 141700 (SU)**

(72) Erfinder : **VALIEV, Baidar Garifovich**
**pr. Makeeva, 41-17, Chelyabinskaya obl.**
**Miass, 456322 (SU)**
Erfinder : **KOLP, Albert Yakovlevich**
**ul. Zhukovskogo, 12-20, Chelyabinskaya obl.**
**Miass, 456324 (SU)**
Erfinder : **MARIINA, Nailya Baidarovna**
**ul. Molodogvardeiskaya, 8a-4, Sverdlovskaya**
**obl.**
**Kamyshlov, 623530 (SU)**
Erfinder : **KOLP, Yakov Albertovich**
**MFTI, obschezhitie No.3-111, Moskovskaya**
**obl.**
**Dolgroprudny, 141700 (SU)**

(74) Vertreter : **Sparing Röhl Henseler**
**Patentanwälte**
**Postfach 14 04 43**
**D-40074 Düsseldorf (DE)**

## Beschreibung

### Gebiet der Technik

Die vorliegende Erfindung betrifft Wandler zur Umwandlung einer Energieart in eine andere und bezieht sich insbesondere auf ein Verfahren zur Umwandlung der Energie von Wellen in eine nutzbare Energieart und eine Wellenkraftanlage.

### Zugrundeliegender Stand der Technik

Zur Zeit ist das Problem der Energiegewinnung nach ökologisch reinen Verfahren recht aktuell. Der Lösung dieser Probleme sind viele theoretische und experimentelle Arbeiten sowie Erfindungen gewidmet.

Die bestehenden Verfahren zur Energiegewinnung führen zur Änderung in der ökologischen Umgebung des Planeten. So führen insbesondere die Wärmekraftwerke zur Überhitzung und Verunreinigung der Atmosphäre, die Kernkraftwerke zur Überhitzung der Atmosphäre und zu einer höheren radioaktiven Untergrundstrahlung, während das Errichten von Wasserkraftwerken die Beschlagnahme nutzbarer Bodenflächen, die für den industriellen und landwirtschaftlichen Einsatz geeignet sind, erfordern. Einer der möglichen Wege zur Lösung der genannten Probleme ist die Verwendung alternativer Energiequellen, insbesondere eine erhöhte Effektivität der Energieentnahme aus Meereswellen in einem weiten Bereich ihrer Frequenzen.

Die Ausnutzung konventioneller Prinzipien zur Energieumwandlung, die auf der Umwandlung einer Schwingbewegung der Meereswellen mittels verschiedenartiger Kurven- und Hebelmechanismen, Schwimmkörper, Hydraulik- und Druckluftsysteme basieren, gibt wegen deren geringer Wirksamkeit keine Möglichkeit, Energieanlagen mit vertretbarer Leistung und akzeptablen Parametern, die die Masse und die Abmessungen betreffen, zu schaffen, welche für den Einbau auf den bestehenden Schwimmmitteln geeignet wären.

Bekannt sind Wellenkraftanlagen, deren Wirkungsweise auf der Umwandlung der potentiellen Energie von durch die Welle gehobenem Wasser in eine kinetische Rotationsenergie einer Wasserturbine beruht, die mit einem elektrischen Generator zusammenarbeitet. Derartige Wellenkraftanlagen sind, z.B. in Form eines durch die Wellenenergie betriebenen Motors (US,A,4152895) realisiert. Der Motor ist in Form einer (in bezug auf den Meeresboden) feststehenden sphärischen Kuppel ausgeführt, deren Oberteil sich auf der Wasseroberfläche befindet. Die Kuppel ist mit einem vertikalen Schacht (Rohr) mit einem über diesem angeordneten Refraktionstrog versehen. Im Unterteil des Schachtes ist an einer vertikal gelagerten Welle eine Wasserturbine und im Oberteil des Schachtes an derselben Welle ein elektrischer Generator befestigt.

Die Schaltungsanordnung zur Elektroenergieerzeugung mit Hilfe der Wellenkraftmaschine erinnert prinzipiell an ein Wasserkraftwerk, nur daß man für das letztere speziell zur Vergrößerung des Staudruckes eine Wasserhöhendifferenz schafft. Naheliegenderweise hängt die Wasserhöhendifferenz ganz und gar von der Höhe ab, auf die das Wasser durch die Welle gebogen wird. Dadurch ist eine geringe Effektivität der Anordnung bedingt. Darüber hinaus ist zwar das Vorhandensein bewegter, durch Meereswasser umströmter Baugruppen in ingenieurtechnischer Hinsicht realisierbar, jedoch wird dazu die Anwendung von besonderen, korrosionsfesten Werkstoffen und speziellen Vorrichtungen erfordert, die ein Ankleben von Meerorganismen und- pflanzen an den Reibflächen verhindern.

Das Obengesagte zeigt, daß die zuletzt betrachtete Anordnung und ihr ähnliche hydraulische Wellenkraftanlagen den konventionellen Wasserkraftwerken an technischer Effektivität unterlegen sind.

Es sind auch Wellenkraftanlagen bekannt, die nach einem Verfahren arbeiten, das auf der Umwandlung einer Schwingungsenergie der Schwimmmittel wie z.B. Schwimmkörper, Flöße u.dgl., die sich auf der Wasseroberfläche befinden, mit Hilfe bekannter Wandlervorrichtungen (Hebelvorrichtungen, Kurbeltriebwerke, Zahngetriebe, und Stangenverzahnungen) in die Energie einer Rotationsbewegung des elektrischen Generators beruhen. Die betreffenden Anlagen werden durch die Änderung der Lage eines mechanischen Körpers im Raum in bezug auf eine Vorrichtung charakterisiert, die gegen Einwirkungen der Wellen inert ist oder eine Bewegung in Gegenphase vollzieht.

Bekannt ist eine Anordnung (US,A,4300871) bekannt, die das Prinzip eines schwingenden Flügels ausnutzt. Die Anordnung besteht aus mehreren Flügeln, die auf einer gemeinsamen Achse schwingen. Im Inneren jedes Flügels sind Kreisel untergebracht, die mit dem zugehörigen Flügel und der Achse verbunden sind. Eine relative Bewegung des Flügels und der Achse ruft eine Präzessionskraft des Kreises hervor, die zur Erzeugung einer Elektroenergie ausgenutzt wird. Das Verfahren besteht in der Serienwandlung von Wellenschwingungen in Winkelverschiebungen des Flügels, weiter in eine Präzession des Kreisels und schließlich in eine nutzbare Energieart.

Bekannt sind Anordnungen, die auf Grundlage einer sog. "Salter-Ente" (GB,A,1482085) ausgeführt sind, Sie sind gegen die Bewegungsrichtung der Wellen empfindlich. Die höchste Effektivität der Anordnung wird dann erreicht, wenn die Welle von der Seite des "Entenschabels" her aufläuft, die kleinste Effektivität ergibt sich aber bei einem Anstellwinkel von 90° und darüber. Bei solchen Anstellwinkeln funktioniert die Anordnung praktisch nicht. Außerdem reagiert die Anordnung schwach auf die senkrechte Komponente der Wellenschwingungen, weil eine der "Enten" gemeinsame unbewegliche Achse aufweist. Alles Obengesagte erlaubt es nicht, eine wirksame Wellenkraftanlage auf der Basis von Salter-Enten zu schaffen.

Bekannt sind auch Wellenkraftanlagen, die nach einem Verfahren arbeiten, das auf der Verwendung von Luft als Arbeitsmedium beruht, die durch die Wasserwellenenergie verdichtet wird und eine Druckluftturbine, die mit einem Elektrogenerator gekoppelt ist, in Drehung versetzt. Diese Anordnungen sind nahe dem System Zylinder-Kolben, wobei als Kolben Wasser dient. Als typische Wellenkraftanlage dieser Klasse kann man eine Anordnung (US,A,4405866) annehmen, die eine Luftkammer, deren Boden zur Wasserobeffläche hin offen ist, und ein System von Kanälen enthält, die die Luftkammer mit einer Turbinen-Generator-Einheit verbinden. Die letztere stellt zwei Turbinen gleicher Drehrichtung dar, die eine gemeinsame Welle aufweisen, die mit einem Elektrogenerator gekuppelt ist. Der Generator wird durch die eine Turbine bei der Verdichtung von Luft in der Kammer der Anordnung und durch die andere Turbine bei der Zuführung der atmosphärischen Luft ins Innere der Kammer beim Wellenabfall gedreht. Somit entstehen bei Aufwärts- und Abwärtsbewegung der Wasseroberfläche im Laufe des Wellenganges im Inneren der Luftkammer Luftströmungen mit entgegengesetzten Richtungen, welche wechselweise durch die zugehörigen Turbinen gleicher Drehrichtung fließen.

Eines der Probleme ist bei der Entwicklung der genannten Anlagen die Schaffung von Druckluftturbinen, bei denen die Luftverdichtung zyklisch erfolgt und die Rotation der Turbine ununterbrochen sein muß. Dieser Widerspruch zwingt zum Einsatz von Druckspeichern, durch die Luftschwankungen am Turbineneintritt ausgeglichen werden.

Allerdings wird durch die zusätzlichen vorhandenen Vorrichtungen die Bauart der Kraftanlage kompliziert und werden ihre ökonomische Kennziffern verschlechtert. Darüber hinaus wird in den hydropneumatischen Wellenkraftanlagen zum Antrieb der Turbine Meeresluft verwendet, die mit Meereswasserdämpfen gesättigt ist, die aktive Salzionen in sich einschließen, die besonders aggressiv gegen Werkstoffe sind, mit denen sie in unmittelbarem Kontakt beim Dauerbetrieb stehen, was zu einem Frühausfall der Bauelemente der Anlage führt.

Darüber hinaus besitzen die beschriebenen Anlagen, welche nach den obenbehandelten Verfahren arbeiten, eine geringe spezifische Leistung.

Bekannt sind ferner Wellenkraftanlagen, deren Wirkungsweise auf der Umwandlung von Schwingungen eines auf einem Schwimmittel angeordneten Mechanismus- eines Schwingungserzeugers beruht, der die Energie der Wellenschwingungen unter nachfolgender Umwandlung derselben in elektrische Energie aufnimmt. Als Besonderheit der Wellenkraftanlagen dieser Klasse ist zu bezeichnen, daß die Wellen mit den Arbeitsorganen des Schwingungserzeugers in keinem direkten Kontakt stehen. Das Pumpen einer Wellenenergie in den Schwingungserzeuger geschieht durch Einwirkung der Wellen nur auf das Gehäuse der Energieanlage (auf das Schwimmittel). Zu einer der Anordnungen der Wellenkraftanlage dieser Klasse gehört eine solche (JP,A,53-24578), die ein Gehäuse aufweist, in dessen Schwingmitte eine Lagerung eines mit einer Rollbahn versehenen Hebels angeordnet ist. Über die Rollbahn bewegt sich während der Bewegung des Gehäuses ein rollender Körper. An den Enden des Hebels sind Zugstangen ausgeführt, die unter der Einwirkung des rollenden Körpers relativ zum Gehäuse bewegt werden. Die Bewegungsenergie der Zugstangen wird in eine herkömmliche, z.B. elektrische Energie verwandelt. Bei dieser Anlage wird die geradlinige Bewegung des rollenden Körpers in eine hin- und hergehende Bewegung umgewandelt. Jedoch besitzen die Anlagen dieses Typs eine geringe spezifische Leistung.

Es ist auch ein Verfahren zur Umwandlung einer Schwingbewegung in eine Drehbewegung bekannt, deren Wirkungsweise auf der Erscheinung einer oszillationsbedingten Aufrechterhaltung der Rotation (I.I.Blekhman-"Sinkhronisatsia v prirode i tekhnike /Synchronisation in der Natur und der Technik/", 1981, Verlag "Nauka", Moskau, S.142, 143, Abb.19) beruht, bei welcher die Oszillation der Drehachse einer Unwucht mit einer gewissen Frequenz $\omega$ dazu führen kann, daß die Unwucht stationär mit der Frequenz $\omega$ oder einer ein Vielfaches dieser betragenden Frequenz umlaufen soll. Diese Erscheinung bezeichnet man als oszillationsbedingte Aufrechterhaltung der Rotation. Jedoch ist die oszillationsbedingte Aufrecherhaltung der Rotation der Unwucht dann durchführbar, wenn die Schwingungen nach einem harmonischen Gesetz mit vorgegebener Frequenz $\omega$ geändert werden. Unter der Berücksichtigung, daß die Bewegung der Meereswellen einem schmalbandigen zufälligen Prozeß gehorcht, wird dadurch die Ausnutzung der zu betrachtenden Erscheinung zur Umwandlung der Schwingbewegung in eine Drehbewegung wegen komplizierter Anpassung der Rotationsfrequenz der Unwucht an die Schwingungsfrequenz der Unwuchtachse unter der Wirkung der Schwingungen der Meereswellen erschwert.

Außerdem ist dieses Verfahren resonanzfern, deshalb ist die Effektivität der Energieentnahme bei den Einrichtungen, die nach diesem Verfahren arbeiten, nicht hoch.

Daneben ist eine Anordnung (Zeitschrift "Vestnik mashinostroenia", Nr.11, 1976, Teil 54,55, im Artikel "Mechanismus zur Umwandlung einer Hin- und Herbewegung in eine Drehbewegung ohne starre kinematische Verbindung") bekannt, deren Wirkungsweise auf der Erscheinung einer steuerbaren dynamischen Resonanz beruht. Als Bedingung, die die Resonanz hervorruft, dient die Herstellung einer steuerbaren Verbindung zwischen der rotierenden Unwucht und einer Quelle äußerer Schwingungen und eine Nachstimmung der Schwingungsparameter des äußeren Mediums oder der Rotationsfrequenz der Unwucht. Dies bietet die Möglichkeit, ein ununterbrochenes "Umpumpen " der-Schwingungsenergie in eine Drehbewegung der Unwucht zu realisieren.

Bekannt ist ferner ein Verfahren zur Umwandlung einer hin- und hergehenden Bewegung in eine Drehbewegung der Unwucht, deren Wirkungsweise in einer zusätzlichen Anpassung der Rotationsfrequenz der Unwucht an die Schwingungsfrequenz ihrer Achse unter der Wirkung von Wellen durch Änderung der Exzentrizität des Massenmittelpunktes der Unwucht besteht, wobei bei Abnahme der Schwingungsfrequenz die Exzentrizität vergrößert und bei Zunahme der Schwingungsfrequenz vermindert wird (SU,A,1285183), sowie eine Anordnung zur Durchführung dieses Verfahrens, welche eine Stütze, eine darauf angeordnete Umwucht, eine auf der letzteren mit Möglichkeit einer radialen Verschiebung angeordnete Unwucht mit Rollkörpern, die mit zur Unwucht axial liegenden ringförmigen Führungen zusammenwirken, die als zwei Stumpfkegel ausgebildet sind, deren größere Grundflächen einander zugewandt sind und die auf den Seitenflächen flache Abschnitte aufweisen, die der Achse der Unwucht parallel angeordnet sind, sowie einen Geber für Wellenparameter, eine Recheneinheit und eine Vorrichtung zur Verschiebung der Rollkörper längs der Achse der Unwucht. Die Entwicklung einer solchen Anlage, die dieses Verfahren realisiert, ist mit bedeutenden konstruktiv-technologischen Schwierigkeiten verbunden.

Bekannt ist ein Verfahren zur Umwandlung der Energie von Wellen auf Grundlage der Erscheinung einer steuerbaren dynamischen Resonanz, das in einer Anordnung (JP,A,62-1106) realisiert ist, in der ein Schwingungserzeuger verwendet wird, der zwei gegenphasig umlaufende Unwuchten und einen Geschwindigkeitsregler aufweist, der mittels Wellen mit den Umwuchten verbunden ist, wobei die Rotationsfrequenz der Unwuchten mit der Schwingungsfrequenz des Schwimmittels so synchronisiert wird, daß die Massenkräfte der umlaufenden Unwuchten in entgegengesetzter Phase gegenüber den Schwingungen des Schwimmittels wirken. Hierbei nimmt mit sinkender Schwingungsfrequenz des Schwimmittels die Rotationsfrequenz der Unwuchten ab und umgekehrt.

Das genannte Verfahren setzt die Gleichheit der Umlauffrequenz der Unwucht und der Schwingungsfrequenz f der Mee - reswellen voraus, d.h.

$$f = V_o/2\pi R \quad (1)$$

ist, worin $V_o$ für die lineare Bewegungsgeschwindigkeit des Massenmittelpunktes der Unwucht bei Rotation und R für den Trägheitsradius des Massenmittelpunktes steht.

Daraus kann man eine lineare Bewegungsgeschwindigkeit der Unwucht, bei der die Synchronisation möglich ist, ermitteln zu

$$V_o = 2\pi R\, f \quad (2)$$

Daneben gibt es eine andere Bedingung, ohne deren Erfüllung keine Drehung der Unwucht möglich ist.

Zur Drehung der Unwucht im Gravitationsfeld der Erde wird benötigt, daß die kinetische Energie der Unwucht einer Masse M eine potentielle Energie übersteigt, die zum Heben des Massenmittelpunktes der Unwucht auf eine Höhe erforderlich ist, die zwei Trägheitsradien R des Massenmittelpunktes der Unwucht gleich ist, d.h. gilt

$$\frac{M\,V^2}{2} \geqq M.2gR \quad (3)$$

wobei g die Erdbeschleunigung ist. Daraus ergibt sich

$$V = (4\,gR)^{1/2} \quad (4).$$

Andererseits muß die lineare Geschwindigkeit des Massenmittelpunktes der Unwucht bei Rotation gleich der linearen Drehgeschwindigkeit des Massenmittelpunktes der Unwucht bei Resonanz sein, d.h. gilt

$$2\pi R\, f = (4\,gR)^{1/2} \quad (5)$$

Daraus ermittelt sich der Trägheitsradius des Massenmittelpunktes zu

$$R = \frac{g}{\pi^2 f^2} \quad (6).$$

Diese Bedingung legt die Außenmaße der Unwuchten des Schwingungserzeugers fest.

Schätzen wir beispielsweise die Abmessungen einer Unwucht bei einer Seegangssintensität von 5 Seestärke wie folgt ein:

T = 6 s - Wellenperiode (f = 1/6 Hz);

H = 3 m - Wellenhöhe (Höhe einer Welle dreiprozentiger Versorgung 2,0 bis 3,5 m). Dabei erhält man

$$R = \frac{9,8}{3,14^2 \ (1/6)^2} = 35 \ m.$$

Die Herstellung von Unwuchten mit derartigen Abmessungen bereitet erhebliche technische Schwierigkeiten. Hinzu kommt, daß eine solche Vergrößerung der Abmessungen der Unwuchten zu einer wesentlichen Vergrößerung der Masse der Wellenkraftanlage führt.

Denkbar ist eine Verminderung der Abmessungen der Unwuchten, wenn zur Drehung derselben Schwungräder mit vorgespeicherter mechanischer Energie eingesetzt werden, die die kinetische Energie der Unwucht mehrfach übersteigt. Dies ist bei Schwungrädern möglich, deren Masse die Masse der Unwuchten mehrfach übersteigt, was zu einer beträchtlichen Senkung deren spezifischer Leistung führt.

Offenbarung der Erfindung

Der Erfindung ist die Aufgabe zugrundegelegt, ein Verfahren zur Umwandlung der Energie von Wellen und eine ökologisch reine, kompakte und gefahrlose Wellenkraftanlage zu seiner Durchführung zu entwickeln, bei denen durch Änderung der Bewegungsbahn der Unwuchten dank der Ausnutzung der Erscheinung einer steuerbaren dynamischen Resonanz und des Gravitationspotentials der Erde bei Wechselwirkung des Schwingungserzeugers mit Wellen und durch geeignete Änderung der Bauart der Wellenkraftanlage eine erhöhte Menge der durch den Schwingungserzeuger gespeicherten Energie und deren Umwandlung unter gleichzeitiger Vereinfachung der Bauart der Anlage gewährleistet würde.

Die gestellte Aufgabe wird dadurch gelöst, daß beim Verfahren zur Umwandlung der Energie von Wellen mit Hilfe eines auf einem Schwimmittel angeordneten Schwingungserzeugers mit mindestens einer Unwucht, die auf einer Achse sitzt und um diese drehbar ist, bei welchem Verfahren die Energiespeicherung durch die Unwucht und die Energieentnahme aus der Unwucht in der Hebeperiode des Schwimmittels auf der Welle erfolgt, erfindungsgemäß die Achse mit der Unwucht über dem Schwimmittel auf eine vorgegebene Höhe gehoben wird, von der der freie Fall der Achse samt der Unwucht gewährleistet wird, bis die Achse mit dem Schwimmittel bei der zum Schwimmittel horizontalen Lage der Unwucht in Berührung kommt, und durch die Unwucht eine Energie gespeichert wird, worauf bei Drehung der Unwucht um ihre Achse um 180° und bei anschließendem Heben der Achse samt der Unwucht bei horizontaler Lage der letzteren die Energieentnahme durchgeführt wird, wobei der freie Fall der Achse mit der Unwucht bis zur Berührung derselben mit dem Schwimmittel und die Drehung der Unwucht in der Hebeperiode des Schwimmittels auf der Welle erfolgt, indem bei Drehung der Unwucht die Summierung der von der Unwucht bei deren freiem Fall und Drehung aufgespeicherten Energie mit einer Wellenenergie, die über das Schwimmittel auf die Unwucht übertragen wird, gesichert wird, und daß das Heben der Achse samt der Unwucht auf die vorgegebene Höhe und das Bringen der Unwucht in die Ausgangslage in der Senkperiode des Schwimmittels auf der Welle vorgenommen wird, wobei bei Abnahme der Schwingungsfrequenz des Schwimmittels auf der Welle die Hubhöhe der Achse mit Unwucht vergrößert und bei Zunahme der Schwingungsfrequenz vermindert wird.

Es ist zweckmäßig, daß bei der Unterbringung zweier Unwuchten von im wesentlichen gleicher Masse im Schwingungserzeuger der freie Fall, die Drehung durchselben um 180° um die Achse und deren Heben auf die vorgegebene Höhe in Gegenphase vorgenommen wird und daß bei Unterbringung dreier Unwuchten im Schwingungserzeuger, bei denen die Masse zweier von ihnen der Masse der dritten Unwucht im wesentlichen gleich ist, der freie Fall, die Drehung und das Heben auf die vorgegebene Höhe der Unwucht mit größerer Masse in Gegenphase zu den zwei anderen Unwuchten durchgeführt wird.

Ein solches Verfahren, dem die Ausnutzung der Erscheinung einer steuerbaren dynamischen Resonanz und des Gravitationspotentials der Erde bei der Wechselwirkung des Schwingungserzeugers mit der Welle zugrundegelegt ist, sichert eine Erhöhung des von den Unwuchten gespeicherten Energievorrats, was zur Vergrößerung der durch den Schwingungserzeuger gespeicherten Energiemenge beiträgt.

Die gestellte Aufgabe wird auch dadurch gelöst, daß bei der Wellenkraftanlage zur Durchführung des Verfahrens zur Umwandlung der Energie von Wellen, welche ein in schwimmendem Zustand befindliches, unter der Wirkung von Wellen schlingerndes Schwimmittel, ein am Schwimmittel befestigtes Hohlgehäuse, in dem ein Schwingungserzeuger mit Unwuchten untergebracht ist, einen elektrischen Generator, der die Energieentnahme von den Unwuchten gewährleistet, und einen Geber für Massenkräfte enthält, gemäß der Erfindung im Hohlgehäuse zwei vertikale Führungen angeordnet sind und der Schwingungserzeuger eine Stütze darstellt, an der die Unwuchten um eine Achse drehbar angebracht sind, wobei die Stütze an den vertikalen Führungen mit Möglichkeit einer hin- und hergehenden Bewegung über die letzteren eingebaut ist, sowie daß die Anlage noch mit einer Vorrichtung zur Verriegelung und Begrenzung der Verschiebung der Stütze versehen ist, welche über eine Steuerverbindung mit dem Massenkraftgeber verbunden ist.

Es ist zweckmäßig, daß im Schwingungserzeuger der Wellenkraftanlage auf einer gemeinsamen Achse, die an der Stütze befestigt ist, eine gerade Anzahl von Unwuchten mit Möglichkeit einer Drehung um diese

EP 0 446 356 B1

Achse angebracht ist und daß im Bodenteil des Hohlgehäuses eine unbewegliche Stütze, die als hohler Halbzylinder ausgebildet ist,dessen Hohlraum den Unwuchten zugewandt ist angeordnet ist, und als Ständer des elektrischen Generators dient, wobei als Läufer des letzteren die Unwuchten des Schwingungserzeugers benutzt werden, die bei ihrer Drehung an den Hohlraum des hohlen Halbzylinders der unbeweglichen Stütze unter Belassung eines minimalen Spaltes angepaßt werden.

Außerdem ist es zweckmäßig, daß im Schwingungserzeuger der Wellenkraftanlage auf einer gemeinsamen Achse, die an der Stütze befestigt ist, eine gerade Anzahl von Unwuchten mit Möglichkeit einer Drehung um diese Achse angebracht ist und daß im Hohlgehäuse zwischen den vertikalen Führungen parallel zu diesen eine zur Energieentnahme dienende Welle mit Längsschlitzen eingebaut, durch die Stütze des Schwingungserzeugers hindurchgeführt und über eine Freilaufkupplung mit dem elektrischen Generator verbunden ist, wobei auf den Unwuchten des Schwingungserzeugers Zahnkränze ausgeführt sind, die über ein Zahnrad mit den Längsschlitzen der zur Energieentnahme dienenden Welle kinematisch gekuppelt sind, wodurch die Drehung der Unwuchten in Gegenphase gewährleistet ist.

Bei der Wellenkraftanlage können in dem Schwingungserzeuger als Unwuchter elektrisch Generatoren benutzt sind, die an zwei Lenkern um die Achsen dieser herum drehbar angebracht sind, wobei die Längsachsen der an der Stütze befestigten Lenker parallel zueinander und zur Längsachse der Stütze sind, wobei an den Ausgangswellen der Läufer der elektrischen Generatoren Freilaufkupplungen und getriebene Zahnräder eingebaut sind, und daß die letzteren mit den an der Stütze des Schwingungserzeugers befestigten Zahrädern verbunden sind.

Es ist wünschenswert, die Wellenkraftanlage mit einem Synchronisationsmechanismus zu versehen, der als Kurbeltrieb oder als Zahngetriebe ausgebildet ist und die Lenker miteinander verbindet.

Außerdem ist die Wellenkraftanlage mit einem Höhenbegrenzer der Verschiebung der Stütze des Schwingungserzeugers zu versehen, der mit der Vorrichtung zur Verriegelung und Begrenzung der Verschiebung der Stütze über eine kinematische Verbindung, z.B. ein Schraubengetriebe, gekuppelt und an den vertikalen Führungen angebracht ist.

Solche eine Bauart der Wellenkraftanlage bietet bei Verwendung der vertikalen Führungen zur Hin- und Herbewegung der Unwuchten des Schwingungserzeugers über diese Führungen die Möglichkeit, eine vorbestimmte Bewegungsbahn der Unwuchten in der vertikalen Ebene zu gewährleisten, was gegenüber den bekannten Wellenkraftanlagen zu einer höheren Speicherung der Energie in den Unwuchten unter anschließender Entnahme derselben durch den Elektrogenerator führt.

Dadurch, daß in der erfindungsgemäßen Anlage die Vorrichtung zur Verriegelung und Begrenzung der Verschiebung der Stütze, der Synchronisationsmechanismus und der Höhenbegrenzer eingebaut sind, werden Bedingungen für die Realisierung der steuerbaren dynamischen Resonanz gesichert, die auf einer Anpassung der Zeit für die Verschiebung der Unwuchten des Schwingungserzeugers über die Bewegungsbahn an die Schwingungsfrequenz des auf der Welle oszillierenden Schwimmittels innerhalb eines Zyklus beruht, welche Anpassung durch Regelung der Hubhöhe der Achse der Unwucht über dem Schwimmittel durchgeführt wird, wobei bei Abnahme der Schwingungsfrequenz des Schwimmittels auf der Welle die Hubhöhe der Stütze mit Unwuchten vergrößert und bei Zunahme der Schwingungsfrequenz vermindert wird.

Außerdem sichert eine solche Ausführung der Wellenkraftanlage Bedingungen, unter denen die von den Unwuchten gespeicherte Energie durch elektrische Generatoren verschiedener Typen entnommen werden kann.

Die erfindungsgemäßen Wellenkraftanlagen sind konstruktiv einfach, kompakt, ökologisch rein und betriebssicher.

Kurzbeschreibung der Zeichnungen

Im weiteren wird die Erfindung an Hand von Ausführungsbeispielen unter Bezugnahme auf die beigelegten Zeichnungen näher erläutert.

Es zeigt

Fig. 1 Hauptbestandteile einer Wellenkraftanlage, die zur Realisierung des erfindungsgemäßen Verfahrens zur Umwandlung der Energie von Wellen erforderlich sind;

Fig. 2 schematische Darstellung der Energiespeicherung in der Unwucht bei deren Zusammenwirkung mit dem schwingenden Schwimmittel;

Fig. 3 eine Wellenkraftanlage nach der Erfindung;

Fig. 4 eine Drausicht eines Schwingungserzeugers;

Fig. 5 einen Schnitt V-V in Fig. 4;

Fig. 6 die Wellenkraftanlage unter Verwendung einer Welle zur Energieentnahme;

Fig. 7 eine Draufsicht des gleichen wie in Fig. 6;

6

Fig. 8 einen Schnitt VIII-VIII in Fig. 7;
Fig. 9 eine Wellenkraftanlage, bei der als Unwuchten des Schwingungserzeugers elektrische Generatoren benutzt werden;
Fig. 10 einen Schnitt X-X in Fig. 9;
Fig. 11 eine Seitenansicht in Fig. 10.

Bevorzugte Ausführungsvarianten der Erfindung

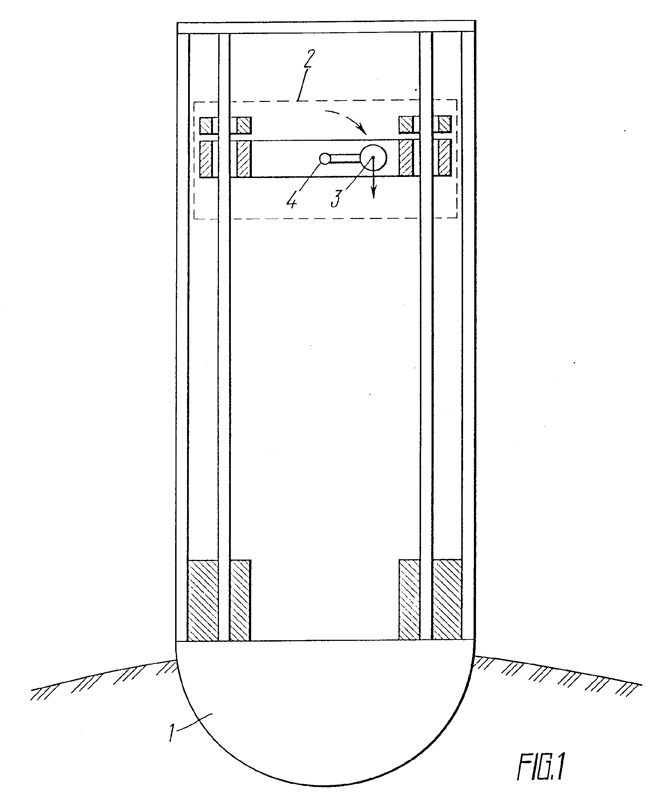

Das erfindungsgemäße Verfahren zur Umwandlung der Energie von Wellen in eine nutzbare Energieart besteht darin, daß man auf einem Schwimmittel 1 (Fig. 1) einen Schwingungserzeuger 2 (durch gestrichelte Linien in der Zeichnung gezeigt) mit einer Unwucht 3 anordnet, die um ihre eigene Achse 4 drehbar angeordnet ist.

Es sollen nun physikalische Vorgänge betrachtet werden, welche bei der Umwandlung der Wellenenergie ablaufen.

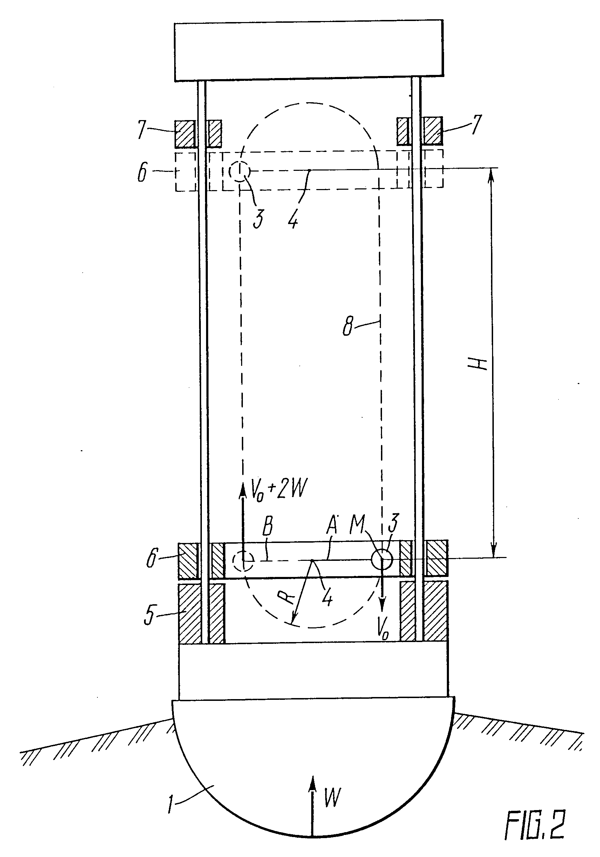

Erfindungsgemäß hebt man die Achse 4 (Fig. 2) mit der Unwucht 3 oberhalb des Schwimmittels 1 auf eine vorgegebene Höhe H, gerechnet von diesem, und ordnet horizontal zum Schwimmittel 1 an. Dabei ist die potentielle Energie der Unwucht 3

$$E_p = M_gH \quad (7)$$

worin M die Masse der Unwucht 3 und g die Erdbeschleunigung bedeutet.

Im Augenblick eine auf einer Welle erfolgenden Hebens des Schwimmittels 1 wird der freie Fall der Unwucht 3 von der Höhe H bis zur Berührung der Achse 4 der Unwucht 3 mit der unbeweglichen Stütze 5, die auf dem Schwimmittel 1 (die Stellung der Unwucht 3 ist durch ausgezogene Linie A angedeutet) aufgestellt ist, gewährleistet. Beim Fallen der Unwucht 3 von der Höhe H erfolgt eine Aufspeicherung der Energie mit der Unwucht 3. Hierbei geht die gespeicherte potentielle Energie $E_p$ der Unwucht in eine kinetische Energie $E_k$ über, die sich ergibt zu

$$E_k = E_1 = MV_o^2/2 \quad (8),$$

wobei $V_o$ eine lineare Anfangsgeschwindigkeit des Massenmittelpunktes der Unwucht 3, die durch folgende Formel definiert wird:

$$V_o = (2\,Hg)^{1/2} \quad (9).$$

Im Zusammenhang damit, daß sich das Schwimmittel 1 zusammen mit der feststehenden Stütze 5 mit einer Geschwindigkeit w entgegen der niederfallenden Unwucht 3 bewegt, soll dessen lineare Geschwindigkeit $V_1$ bei Berührung der feststehenden Stütze 5 mit der Achse 4 betragen:

$$V_1 = V_o + w \quad (10).$$

Bei der Drehung der Unwucht 3 um ihre Achse 4 mm 180°, welche während des Hebens des Schwimmittels 1 auf der Welle stattfindet, nimmt die Unwucht 3 eine horizontale Stellung auf der zur Achse 4 entgegengesetzten Seite (gestrichelte Linie B der Stellung der Unwucht 3) ein. Mit Rücksicht darauf, daß die feststehende Stütze 5 mit einer Geschwindigkeit w bewegt wird, ergibt sich die absolute lineare Geschwindigkeit $V_2$ des Massenmittelpunktes der Unwucht 3 zu:

$$V_2 = V_o + 2w \quad (11).$$

Der Betrag der Energie $E_2$ der Unwucht 3 soll bei deren Übergang von der einen horizontalen Stellung (ausgezogene Linie A) in die andere horizontale Stellung (ausgezogene Linie B) sein:

$$E_2 = M(V_o + 2w)^2/2 \quad (12).$$

Eine Energie $E_3$, die durch die Unwucht 3 bei deren freiem Fall bis zur Berührung der Achse 4 der Unwucht 3 mit dem Schwimmittel 1 unter Summierung mit einer Energie der Wasserwelle gespeichert ist, die über das Schwimmittel 1 zur Unwucht 3 übertragen wird, soll bei Drehung der letzteren um ihre Achse 4 um 180° betragen:

$$E_3 = \frac{M(V_o + 2\,w)^2 - MV_o^2}{2} \quad (13),$$

woraus folgt

$$E_3 = 2M{\cdot}w(V_o + 2w) \quad (14).$$

Bei der Drehung der Unwucht 3 um ihre Achse um 180° und bei anschließendem Heben der Achse 4 samt der Unwucht 3 nimmt man bei horizontaler Lage der letzteren eine Energieentnahme vor.

Bei vollständiger Entnahme der von der Unwucht 3 gespeicherten Energie wird bei einer Variante der Erfindung ohne Berücksichtigung von Reibungsverlusten die Unwucht 3 wieder auf die Höhe H gehoben.

In der Praxis erfolgt eine teilweise Entnahme der Energie von der Unwucht 3, und durch eine Restenergie wird das Heben der Achse 4 samt der Unwucht 3 auf die vorgegebene Höhe H durchgeführt, wobei die Unwucht 3 ihre horizontale Lage beibehält. Sobald die Achse 4 Hubbegrenzer 7 erreicht hat, die an der beweglichen

EP 0 446 356 B1

Stütze 6 angebracht sind, wird die Unwucht 3 um 180° um die Achse 4 gedreht und nimmt die Ausgangsstellung auf der zur Achse 4 entgegengesetzten Seite ein, von wo aus deren Fall wieder beginnt. Dabei führt man das Heben der Achse 4 mit Unwucht 3 auf die vorgegebene Höhe und das Bringen der Unwucht 3 in die Ausgangsstellung während des Herabsenkens des Schwimmittels 1 auf der Welle durch, während der freie Fall der Achse 4 samt der Umwucht 3 bis zur Berührung derselben mit dem Schwimmittel 1 und die Drehung der Unwucht 3 in der Hebeperiode des Schwimmittels 1 auf der Welle verwirklicht wird, wodurch eine zusätzliche Speicherung einer Energie von der Welle stattfindet, welche über das Schwimmittel 1 zur Unwucht 3 übertragen wird.

Die Anpassung der Zeit für das Bewegen der Unwucht 3 über die Bewegungsbahn 8 an die Schwingungsfrequenz des Schwimmittels 1 auf der Welle innerhalb eines Zyklus wird durch Regelung der Hubhöhe der Achse 4 der Unwucht 3 über dem Schwimmittel 1 vorgenommen, wobei bei Abnahme der Schwingungsfrequenz des Schwimmittels 1 auf der Welle die Hubhöhe der Achse 4 samt der Unwucht 3 vergrößert und bei Zunahme der Schwingungsfrequenz vermindert wird.

Die Effektivität der vorgeschlagenen technischen Lösung kann an einem folgenden Beispiel veranschaulicht werden. Zur Berechnung sollen nun energetische Parameter einer Anlage bei folgenden Ausgangsparametern betrachtet werden.

Man wählt die Masse M der Unwucht 3 gleich 1000 kg, den Halbmesser R, mit dem der Massenmittelpunkt der Unwucht 3 um die Achse 4 gedreht wird, gleich 1 m sowie nimmt die linearen Anfangsgeschwindigkeiten Vo des Massenmittelpunktes der Unwucht 3 bei der Zusammenwirkung der letztgenannten mit dem Schwimmittel 1 gleich 5,7,10 bzw. 15 m/s, die lineare Restbewegungsgeschwindigkeit $V_3$ des Massenmittelpunktes 3 im oberen Teil der Bewegungsbahn 8 bedingt gleich 3 m/s an.

Die Seewellenparameter sind bei Seegang von 5 Stärke wie folgt bemessen, und zwar nimmt man die Wellenperiode T gleich 6 s (bei durchscnittlicher Wellenperiode von 5 bis 7 s) und die Wellensteighöhe gleich 3 m an.

Nachstehend sollen Beziehungen zur Ermittlung der Hubhöhe des Massenmittelpunktes der Unwucht 3 bei bekannten Werten der lienaren Anfangsbewegungs-geschwindigkeit $V_o$ des Massenmittelpunktes der Unwucht 3 und der Restbewegungsgeschwindigkeit $V_3$ desselben im oberen Teil der Bewegungsbahn 8 angeführt werden.

Die Menge der kinetischen Energie $E_1$ des Massenmittelpunktes der Unwucht 3 im unteren Teil der Bewegungsbahn 8 wird durch die Summe aus der von der Unwucht 3 im oberen Teil der Bewegungsbahn 8 gespeicherten kinetischen Restenergie und einer potentiellen Energie $E_p$ der Unwucht 3, die im unteren Punkt der Bahn 8 in kinetische Energie vollständig übergeht, bestimmt und ergibt sich zu

$$E_p = M V_o/2 = M V_3^2/2 + M g H \quad (15)$$

woraus man

$$H = \frac{V_o^2 - V_3^2}{2g} \quad (16)$$

erhält. Die Gesamtmenge der in der Unwucht 3 gespeicherten Energie wird aus der Beziehung ( 14 ) ermittelt und ist für verschiedene Varianten der Ausgangsparameter in folgender Tabelle aufgeführt.

| Masse M der Unwucht 3 (kg) | Lineare Anfangsgeschwindigkeit des Massenmittelpunktes der Unwucht 3 (m/s) | Hubhöhe H des Massenmittelpunktes der Unwucht 3, (m) | Gesamtmenge der von der Unwucht 3 gespeicherte Energie (J) |
|---|---|---|---|
| 1 | 2 | 3 | 4 |
| 1000 | 5 | 0,82 | $12 \cdot 10^3$ |
| 1000 | 7 | 2,04 | $16 \cdot 10^3$ |
| 1000 | 10 | 4,6 | $22 \cdot 10^3$ |
| 1000 | 15 | 11,02 | $32 \cdot 10^3$ |

Schätzen wird die Effektivität der beanspruchten technischen Lösung gegenüber dem in JP,A, 62-1106 beschriebenen Verfahren ein. Nach diesem bekannten Verfahren beträgt für die obenangegebenen Seewel-

lenparameter die lineare Bewegungsgeschwindigkeit $V_o$ des Massenmittelpunktes nach der Formel (2)

$$V_o = 2\pi Rf = 2\cdot 3{,}14\cdot\frac{1}{16} = 1{,}04 \text{ m/s.}$$

Um die Drehung der Unwucht im Gravitationsfeld der Erde zu sichern, ist es notwendig, daß die kinetische Energie der Unwucht eine potentielle Energie übersteigt, die zum Heben des Massenmittelpunktes auf eine Höhe erforderlich ist, die zweimal so groß wie der Trägheitshalbmesser ist, d.h. nach (3) gilt

$$\frac{N V^2}{2} \geqq M \, g \, 2.R.$$

Im gewählten Fall ist

$$\frac{1.10^3 .(1{,}04)^2}{2} < 1.10^3 .9{,}8.2.1 \text{ oder } 0{,}54 < 19{,}6.$$

In diesem Fall ist zur Sicherung der Rotation der Unwucht ein Schwungrad erforderlich. Hierbei muß die Masse des Schwungrads, die der Unwucht um mehr als das $\frac{19{,}6}{0{,}54} = 36{,}3$ -fache übersteigen, um die Bedingung (3) erfüllen zu können.

Die Gesamtmasse der Unwucht und des Schwungrades muß nicht weniger als $M'=1.10^3 +36{,}3.10^3 =37{,}3\cdot 10^3$ kg sein.

Die Menge der in die Unwucht zu pumpenden Energie muß in diesem Fall nach (14) sein:

$$E_3 = 2 \, M\cdot w \, (V_o + w) \text{ oder}$$
$$E_3 = 2\cdot 10\cdot 10^3 .1\cdot (1{,}04 + 1) = 4{,}08\cdot 10^3 \text{ J.}$$

Die spezifische Energie des Systems Schwungrad- Unwucht beträgt

$$E_3 /M = \frac{4{,}08\cdot 10^3}{37{,}3\cdot 10^3} = 0{,}11 \text{ J / kg.}$$

Bei der erfindungsgemäßen technischen Lösung ist zur Rotation der Unwucht 3 brauchen keine Schwungräder angewendet zu werden. Daher ist die der Seewelle entnommene Energie in der Unwucht 3 konzentriert und übersteigt, wie aus der Tabelle zu erkennen ist, die von der Unwucht 3 bei der erfindungsgemäßen technischen Lösung gespeicherte Summenenergie E3 um einige 100 Male die spezifische Energie der Unwuchten, die nach dem in JP,A,62-1106 beschriebenen Verfahren gewonnen wird.

Also ist aus den aufgeführten Materialien und analytischen Beziehungen zu erkennen, daß die Ausnutzung der Erscheinung der steuerbaren dynamischen Resonanz und des Gravitationspotentials der Erde bei Wechselwirkung der Unwucht 3 des Schwingungserzeugers (Fig. 1) mit der Welle eine erhöhte Drehgeschwindigkeit der Unwucht 3 gewährleistet, die zur Vergrößerung der dem Schwingungserzeuger 2 entnommenen Energiemenge beiträgt.

Hier sei auch angemerkt, daß die Durchführung des Verfahrens zur Umwandlung der Energie von Wellen mit Hilfe eines auf dem Schwimmittel angeordneten Schwingungserzeugers, der eine Unwucht (von besonders großer Masse) aufweist, eine Gleichgewichtsstörung des Schwimmittels hervorrufen kann. Aus diesem Grunde wird eine gerade Anzahl von Unwuchten verwendet, die nach vorbestimmter Bewegungsbahn in entgegengesetzter Phase zueinander bewegt werden, wobei jedes nachfolgende Paar Unwuchten das Gleichgewicht und die Stabilität des Schwimmittels erhöhen soll. Daher wird bei der weiteren Beschreibung der Bauarten von Wellenkraftanlagen eine gerade Anzahl von Unwuchten benutzt, die in Gegenphase bewegt werden.

Beim Einsatz von drei Unwuchten im Schwingungserzeuger wählt man die Masse zweier von ihnen gleich der Masse der dritten Unwucht aus, wobei der freie Fall, die Drehung und das Heben auf die vorgegebene Höhe der Unwucht mit größerer Masse in entgegengesetzter Phase zu den zwei anderen Unwuchten durchgeführt werden.

Es soll nun eine Wellenkraftanlage zur Durchführung des Verfahrens zur Umwandlung der Energie von Wellen betrachtet werden.

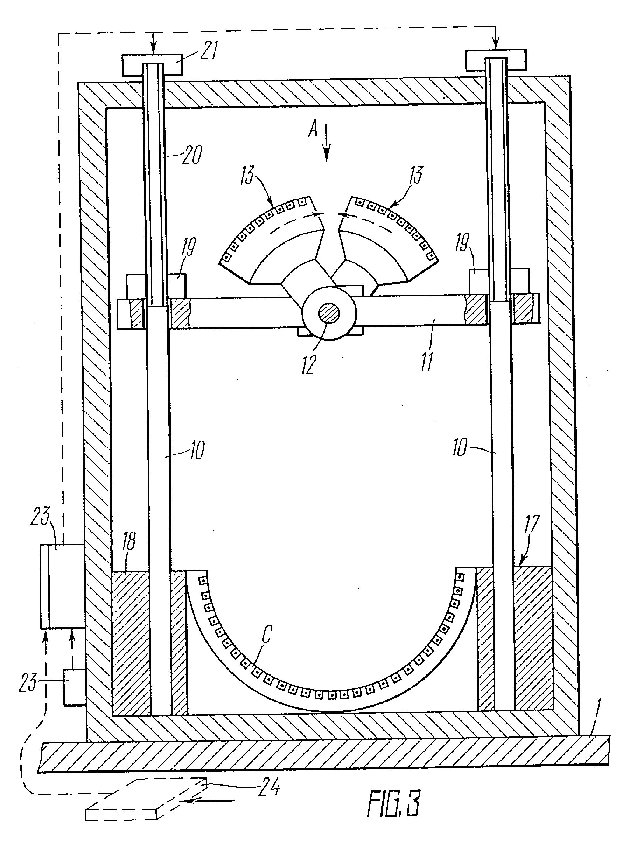

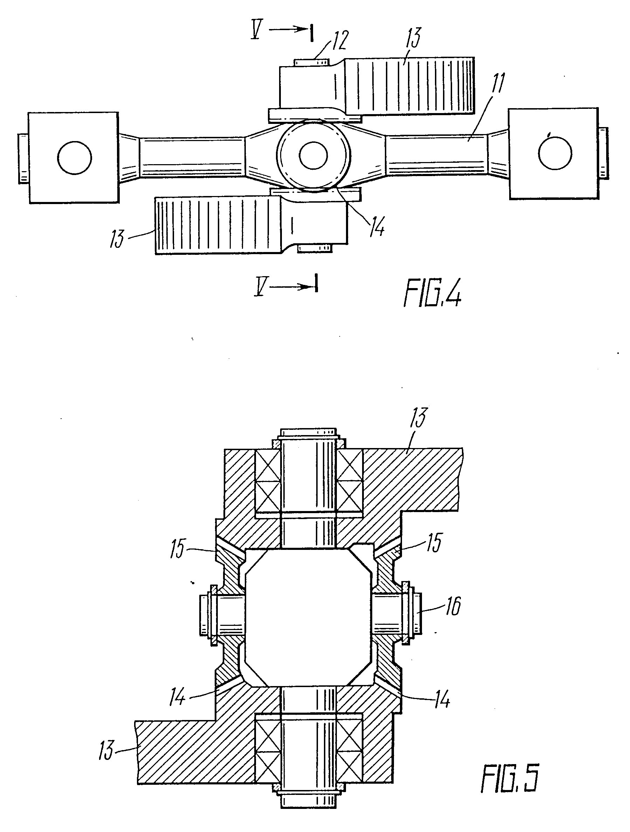

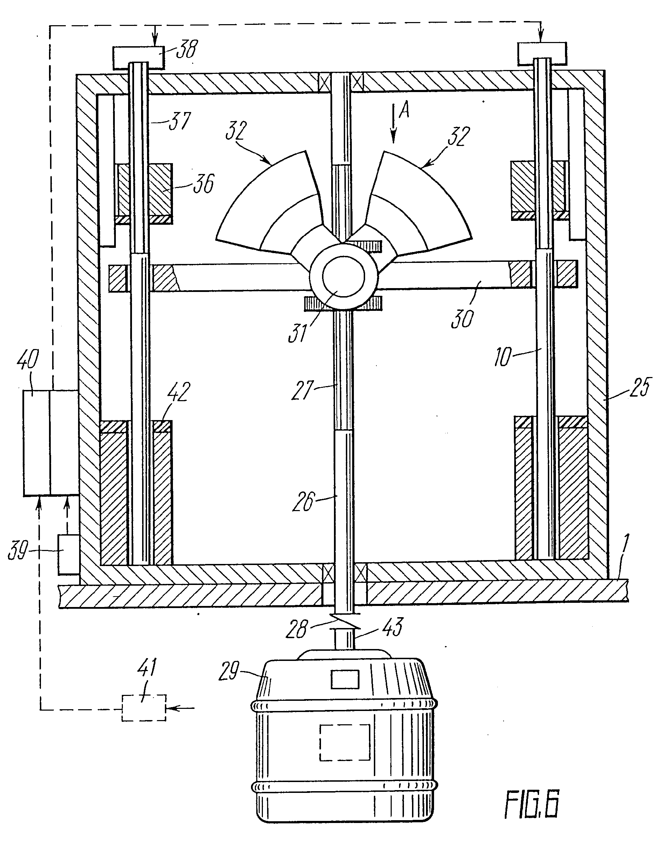

Die Wellenkraftanlage gemäß der Erfindung enthält ein auf einem Schwimmittel 1 (Fig. 3) befestigtes Gehäuse 9 mit in diesem eingebauten vertikalen Führungen 10, an denen ein Schwingungserzeuger angebracht ist. Der Schwingungserzeuger enthält eine Stütze 11, die in den vertikalen Führungen 10 hin- und herbewegbar über diese gelagert ist, und zwei Unwuchten 13, die im Zentralteil der Stütze 11 an einer durch die bewegliche Stütze 11 gehenden Achse 12 senkrecht zu dieser montiert sind. Die Unwuchten 13 sind kinematisch miteinander über Zahnkränze 14 (Fig. 4,5) verbunden, die mit Zahnrädern 15 (Fig. 5) in Eingriff kommen, die auf einer Achse 16 drehbar um diese sitzen. Die Anlage enthält auch einen elektrischen Generator, dessen Ständer 17 (Fig. 3) eine unbewegliche Stütze 18 ist, die im Bodenteil des Gehäuses 9 angeordnet und als hohler Halbzylinder ausgebildet ist, der mit dem Hohlraum C den Unwuchten 13 zugewandt ist. Als Läufer des elektrischen Generators dienen die Unwuchten 13 des Schwingungserzeugers. Im Oberteil der Führungen 10 ist ein Höhenbegrenzer 19 der Verschiebung der Stütze hin- und herbewegbar angeordnet, der über ein Schraubengetriebe 20 mit einer Vorrichtung 21 zur Verriegelung und Begrenzung der Verschiebung der Stütze gekuppelt ist, die mit einem Geber 22 für Massenkräfte und einer Recheneinheit 23 eine elektrische oder ferngesteuerte Verbindung hat. Als Massenkraftgeber 22 kann ein Wellenparametergeber 24 (in der Zeichnung ist diese Ausführungsform gestrichelt angedeutet) verwendet werden.

Die Wellenkraftanlage funktioniert wie folgt. Zuerst befestigt man auf dem Schwimmittel 1 (Fig. 3) derart, daß sich die Drehachse 12 der Unwuchten 13 in einer Ebene befindet, die zur Bewegungsrichtung der Schwingungen des Schwimmittels 1 senkrecht verläuft. Die Stütze 11 des Schwingungserzeugers wird dabei in der unwirksamen Stellung durch den Begrenzer 19 im Oberteil der Führungen 10 in der Höhe H je nach dem Signal verriegelt, das von der Vorrichtung 21 zur Verriegelung und Begrenzung der Verschiebung aer Stütze eintrifft, wobei die Unwuchten 13 in dem größten Abstand voneinander weggebracht sind und horizontal zum Schimmittel 1 liegen.

Das auf dem Schwimmittel 1 angeordnete Gehäuse 9 vollzieht unter der Wirkung von Wellen Schwinbewegungen. Durch die Recheneinheit 23, die Informationen vom Massenkraftgeber 22 (oder von einem in Fig. 3 gestrichelt gezeigten Wellenparametergeber 24) aufnimmt, wird bei Heben des Schwimmittels 1 (beim Wellenaufstieg) ein Befehl errechnet, der von dieser Recheneinheit an die Stellorgane der Vorrichtung 21 zur Verriegelung und Begrenzung der Verschiebung der Stütze ausgegeben wird, durch welche die Stütze 11 entriegelt wird und dann unter der Wirkung des Gravitationsfeldes der Erde den freien Fall von der vorgegebenen Höhe H nach unten vollzieht. Sobald die bewegliche Stütze 11 die feststehende Stütze 18 berührt hat, werden die Unwuchten 13, indem sie sich weiterbewegen, um die Achse 12 gedreht. Dabei erfolgt ein Abrollen des inneren Hohlraums C der feststehenden Stütze 18 des elektrischen Generators durch die Unwuchten 13 (Läufer) unter Belassung eines minimalen Spaltes zwischen den Außenflächen der Unwuchten 13 und des inneren Hohlraums C und wird ein elektrischer Strom erzeugt. Nachdem die Unwuchten 13 um 180° gedreht worden sind, werden dank der gespeicherten kinetischen Energie die Unwuchten 13 zusammen mit der Stütze 11 auf den Begrenzer 19 der Verschiebung der Stütze aufwärtsbewegt, indem sie ihre horizontale Lage beibehalten. Dadurch, daß die Begrenzer 19 an den vertikalen Führungen 10 angebracht sind, wird die Hubhöhe H der Unwuchten 13 begrenzt, und die Auswahl dieser Höhe H wird durch die Anpassung der Zeit für das Bewegen der Unwuchten 13 über die vorgegebene Bewegungsbahn innerhalb eines Zyklus an die Schwingungsfrequenz des Schwimmittels 1 auf der Welle bestimmt1 wobei bei Abnahme der Schwingungsfrequenz des Schwimmittels 1 die Hubhöhe der Stütze 11 des Schwingungserzeugers vergrößert und bei Zunahme der Schwingungsfrequenz vermindert wird (es handelt sich dabei um eine steuerbare dynamische Resonanz). Sobald die bewegliche Stütze 11 die Begrenzer 19 der Verschiebung der Stütze erreicht haben, werden die Unwuchten 13 durch eine Restenergie um die Achse 12 um 180° gedreht, und bei maximaler Entfernung der Unwuchten 13 voneinander beginnen sie von der Ausgangsstellung aus (die in bezug auf das Schwimmittel 1 horizontal ist) wieder den freien Fall nach unten.

Somit gestattet die Wellenkraftanlage zur Durchführung des Verfahrens zur Umwandlung der Energie von Wellen es:

- die Führungen 10 zur Hin- und Herbewegung der Unwuchten des Schwingungserzeugers in der vertikalen Ebene zu verwenden, was zu einer Vergrößerung der in den Unwuchten 13 zu speichernden Energie führt;

- durch den Begrenzer 19 der Verschiebung der Unwucht und durch die Vorrichtung 21 zur Verriegelung die Stütze 11 mit Unwuchten 13 in der vorgegebenen Höhe H anzuordnen und damit eine maximale Energieentnahme durch den Elektrogenerator zu gewährleisten;

- die Unwuchten 13 des Schwingungserzeugers als Läufer eines elektrischen Generators zu benutzen, was die Bauart der Wellenkraftanlage vereinfacht und die Masse derselben vermindert.

Es ist auch eine andere Ausführungsform der Wellenkraftanlage zur Durchführung des erfindungsgemäßen Verfahrens möglich.

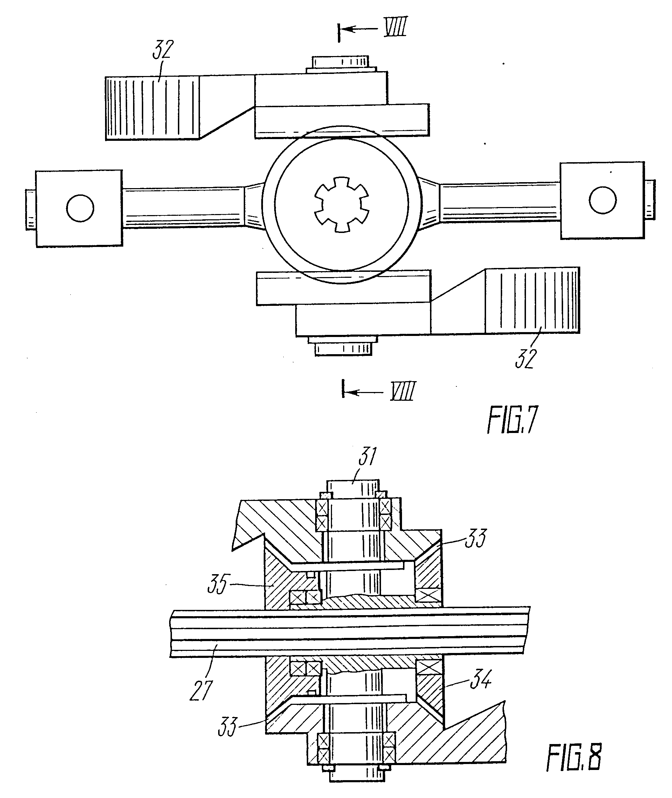

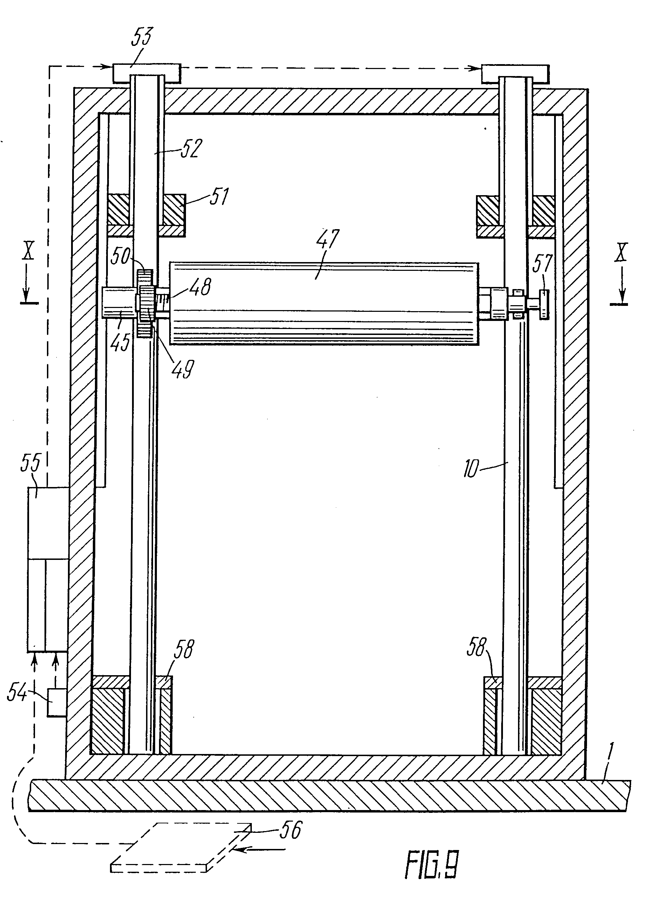

Die erfindungsgemäß ausgeführte Wellenkraftanlage enthält ein auf dem Schwimmittel 1 (Fig. 6) befestigtes Gehäuse 25 mit zwei darin untergebrachten vertikalen Führungen 10 und einer Welle 26 zur Energieentnahme, die parallel den vertikalen Führungen 10 und zwischen diesen eingebaut ist. Die Welle 26 weist Längsschlitze 27 auf, und ein Ende der Welle 26 ist über eine Freilaufkupplung 28 mit einem elektrischen Generator 29 (dieser kann sowohl im Gehäuse 25 als auch außerhalb des Gehäuses 25 angeordnet sein) verbunden. Im Gehäuse 25 ist ein Schwingungserzeuger eingebaut, der eine bewegliche Stütze 30 enthält, die an den vertikalen Führungen 10 hin- und herbewegbar über diese montiert ist. Im Zentralteil der beweglichen Stütze 30 sind an einer durch die Stütze 30 gehenden Achse 31 zwei Unwuchten 32 eines Schwingungserzeugers (Fig. 6, 7) angebracht, did miteinander über auf der Achse 31 (Fig. 6, 8) sitzende Zahnkränze 33 (Fig. 8) kinematisch verbunden sind, die mit Zahnrädern 34, 35 in Eingriff kommen, die auf eine durch die Stütze 30 (Fig.6) verlaufende Welle 26 zur Energieentnahme aufgesetzt ist, wobei das Zahnrad 34 (Fig. 8) auf der Welle 26 (Fig. 6) gleitbar angeordnet ist, während das Zahnrad 35 (Fig. 8) mit der Welle 26 (Fig. 6) über deren Längsschlitze 27 (Fig.6,8) kinematisch verbunden ist. Im Oberteil der Führungen 10 (Fig. 6) ist ein Höhenbegrenzer 36 der Verschiebung der Stütze hin- und herbewegbar angeordnet, der über ein Schraubengetriebe 37 mit einer Vorrichtung 38 zur Verriegelung und Begrenzung der Verschiebung der Stütze gekuppelt ist, welche eine elektrische oder ferngesteuerte Verbindung mit einem Massenkraftgeber 39 und einer Recheneinheit 40 hat. Als Geber 33 kann ein Wellenparametergeber 41 (diese Ausgestaltung ist in der Zeichnung gestrichelt gezeigt) benutzt werden. Im Unterteil des Gehäuses 25 findet eine feststehende Stütze 42 Platz, die die Verschiebung der beweglichen Stütze 30 in der unteren Stellung begrenzt.

Die Wirkungsweise der Wellenkraftanlage besteht im folgenden. Die Anlage befestigt man auf dem Schwimmittel 1 (Fig.6) so, daß sich die Drehachse 31 der Unwuchten 32 in einer Ebene befindet, die zur Bewegungsrichtung der Schwingungen des Schwimmittels 1 senkrecht verläuft. Die Stütze 30 des Schwingungserzeugers wird dabei in der unwirksamen Stellung durch den Begrenzer 36 im Oberteil der Führungen 10 auf einer vorgegebenen Höhe H festgestellt, die durch die Vorrichtung 38 zur Verriegelung und Begrenzung der Stütze koordiniert wird, wobei die Unwuchten 32 in einem maximalen Abstand auseinandergebracht sind und in bezug auf das Schwimmittel 1 horizontal liegen. Das auf dem Schwimmittel 1 aufgestellte Gehäuse 25 vollzieht unter der Wirkung von Wellen Schwingbewegungen. Durch die Recheneinheit 40, welche Informationen von dem Massenkraftgeber 39 (oder einem Wellenparametergeber 41, der in Fig. 6 gestrichelt gezeigt ist) bei Heben des Schwimmittels 1 (während des Wellenaufstiegs) aufnimmt, wird ein Entriegelungsbefehl errechnet und von dieser Recheneinheit an die Stellorgane der Vorrichtung 38 ausgegeben, durch welche die Stütze 30 entriegelt wird, die unter der Wirkung des Gravitationsfeldes der Erde von der vorgegebenen Höhe H niederzufallen beginnt. Sobald die bewegliche Stütze 30 die feststehende Stütze 42 berührt hat, werden die Unwuchten 32 bei ihrer weiteren Bewegung um die Achse 31 um 180° gedreht. Dabei wird durch die zur Energieentnahme dienende Welle 26, die über die Freilaufkupplung 28 mit der Welle 43 des Läufers des elektrischen Generators 29 gekuppelt ist, dieser Läufer in Drehung versetzt, wodurch eine Stromerzeugung erfolgt.

Dabei wird die Menge der dem elektrischen Generator 29 zu entnehmenden Energie auf Kosten einer Energie, die von der Unwucht 32 während deren freien Fall von der Höhe H gespeichert ist, und durch eine Energie vergrößert, die von der Unwucht 32 während deren Drehung um 180° gespeichert wird, wodurch eine zusätzliche Stromerzeugung mit dem elektrischen Generator 29 gewährleistet wird.

Dann werden die Unwuchten 32 zusammen mit der Stütze 30 bis zu den Begrenzern 36 der Verschiebung der Stütze auf die vorgegebene Höhe H aufwärtsbewegt, indem sie ihre horizontale Lage beibehalten. Die Auswahl dieser Höhe wird durch die Anpassung der Zeit für das Bewegen der Unwuchten 32 über die vorgewählte Bewegungsbahn innerhalb eines Zyklus an die Schwingungsfrequenz des Schwimmittels 1 auf der Welle bestimmt, wobei bei Abnahme der Schwingungsfrequenz des Schwimmittels 1 die Hubhöhe der Stütze 30 des Schwingungserzeugers vergrößert und bei Zunahme der Schwingungsfrequenz vermindert wird (es geht um eine steuerbare dynamische Resonanz). Die Welle 26 zur Energieentnahme rotiert dabei nicht und die Freilaufkupplung 28 wird mit der Welle 43 des Läufers des elektrischen Generators 29 außer Eingriff gebracht. Sobald die bewegliche Stütze 30 die Begrenzer 36 erreicht hat, werden die Unwuchten 32 dank einer kinetischen Restenergie um die Achse 31 um 180° gedreht, und bei maximaler Entfernung der Unwuchten 32 voneinander beginnen sie sich wieder nach unten zu bewegen.

Also bietet die Wellenkraftanlage zur Durchführung des erfindungsgemäßen Verfahrens die Möglichkeit:
- die Führungen 10 zur Hin- und Herbewegung des Schwingungserzeugers in der vertikalen Ebene zu verwenden, was zu einer Erhöhung der in den Unwuchten 32 zu speichernden Energie führt;
- durch den Begrenzer 36 der Verschiebung der Stütze und durch die Vorrichtung 38 zur Verriegelung und Begrenzung die Stütze 30 mit Unwuchten 32 in der vorgegebenen Höhe H anzuordnen und damit eine maximale Energieentnahme durch den elektrischen Generator zu sichern;
- die Entnahme der von den Unwuchten 32 gespeicherten Energie durch Verwendung der mit der Welle des Läufers des elektrischen Generators verbundenen Welle 26 zu vereinfachen.

Denkbar ist eine weitere Ausführungsform der Wellenkraftanlage zur Durchführung des Verfahrens zur Umwandlung der Energie von Wellen.

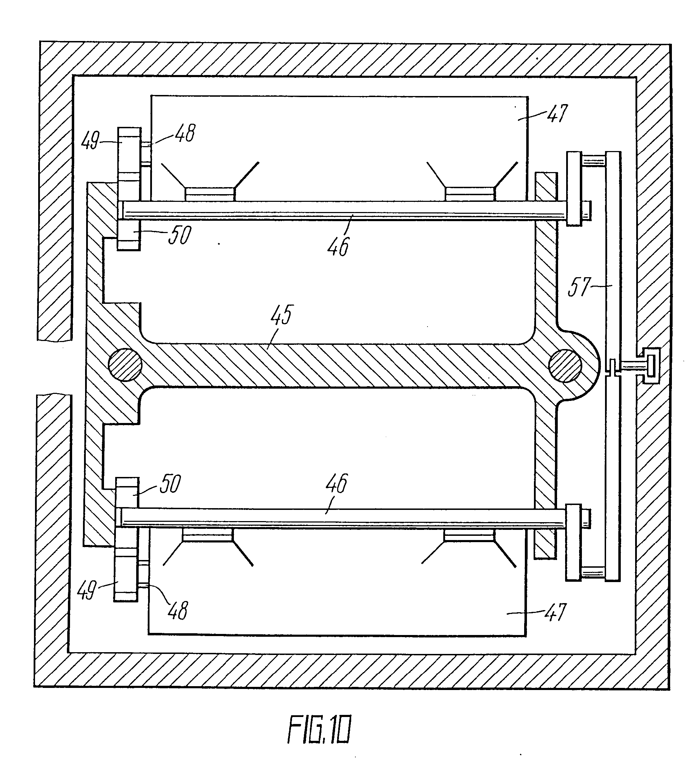

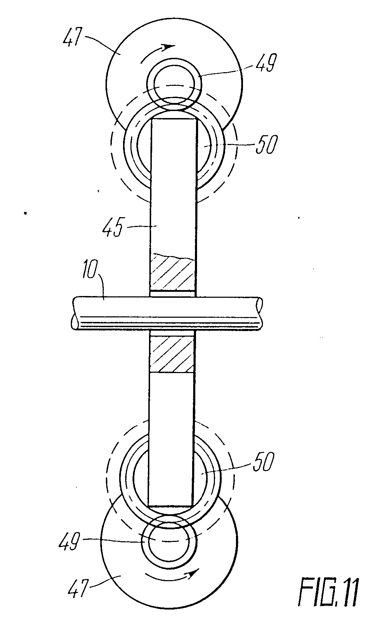

Die Wellenkraftanlage gemäß der Erfindung enthält ein auf dem Schwimmittel 1 (Fig. 9) befestigtes Gehäuse 44 mit zwei darin untergebrachten vertikalen Führungen 10. Im Gehäuse 44 ist ein Schwingungserzeuger angeordnet, der eine bewegliche Stütze 45 (Fig. 9, 10) enthält, die an den vertikalen Führungen 10 (Fig. 9) hin- und herbewegbar über diese angebracht ist. Als Unwuchten sind an der beweglichen Stütze 45 (Fig. 10) auf zwei, zu dieser parallelen Lenkern 46 elektrische Generatoren 47 (Fig. 9, 10) eingebaut. Die Lenker 46 sind starr an der Stütze 45 befestigt. Dabei sind auf den Ausgangswellen der Läufer der elektrischen Generatoren 47 eine Freilaufkupplung 48 und getriebene Zahnräder 49 montiert, wobei die letzteren mit Zahnrädern 50 kinematisch verbunden sind, die an der Stütze 45 des Schwingungserzeugers unbeweglich befestigt sind. Im Oberteil der Führungen 10 (Fig. 9) ist mit Möglichkeit einer Hin- und Herbewegung ein Höhenbegrenzer 51 der Verschiebung der Stütze angeordnet, der über ein Schraubengetriebe 52 (Fig. 9) mit einer Vorrichtung 53 zur Verriegelung und Begrenzung der Verschiebung der Stütze gekuppelt ist, die eine elektrische oder ferngesteuerte Verbindung mit einem Massenkraftgeber 54 und einer Recheneinheit 55 hat. Man kann als Geber 54 einen Wellenparametergeber 56 (in der Zeichnung ist diese Ausführungsvariante durch gestrichelte Linien angedeutet) benutzen.

Die Lenker 46 (Fig. 10) sind miteinander durch einen Synchronisationsmechanismus 57 (Fig. 9, 10) verbunden, der als Kurbeltrieb (oder als Zahnradgetriebe) ausgebildet ist.

Die Wirkungsweise der Wellenkraftanlage besteht im folgenden. Das Gehäuse 44 (Fig. 9) der Wellenkraftanlage befestigt man auf dem Schwimmittel 1 derart, daß sich die Längsachsen der Lenker 46 (Fig.10) (der elektrischen Generatoren 47) in einer Ebene befinden, die zur Bewegungsrichtung der Schwingungen des Schwimmittels 1 (Fig. 9) senkrecht ist. Die Stütze 45 (Fig. 10) des Schwingungserzeugers wird dabei in der unwirksamen Stellung durch den Begrenzer 51 (Fig. 9) im Oberteil der Führungen 10 mit einem Signal verriegelt, das von der Vorrichtung 53 zur Verriegelung und Begrenzung der Verschiebung der Stütze eintrifft, wobei die elektrischen Generatoren 47 (Unwuchten) in einem maximalen Abstand auseinandergebracht sind und in bezug auf das Schwimmittel 1 horizontal liegen. Das auf dem Schwimmittel 1 aufgestellte Gehäuse 44 führt unter der Wirkung von Wellen Schwingbewegungen aus. Durch die Recheneinheit 55, welche Informationen von dem Massenkraftgeber 54 (oder einem in Fig. 9 gestrichelt angedeuteten Wellenparametergeber 56) aufnimmt, wird beim Heben des Schwimmittels 1 (während des Wellenaufstiegs) ein Entriegelungsbefehl errechnet und an die Stellorgane der Vorrichtung 53 zur Verriegelung und Begrenzung der Stütze ausgegeben, durch welche die Stütze 45 des Schwingungserzeugers entriegelt wird, der unter der Wirkung des Gravitationsfeldes der Erde eine Bewegung von der vorgegebenen Hohe nach unten beginnt. Sobald die bewegliche Stütze 45 die feststehende Stütze 58 berührt hat, werden die elektrischen Generatoren 47 (Unwuchten) bei der Fortsetzung ihrer Bewegung um die Lenker 46 (Fig. 10) um 180° gedreht. Dadurch laufen die getriebenen Zahnräder 49 (Fig. 11), indem sie zusammen mit den elektrischen Generatoren 47 (Unwuchten) (Fig. 10, 11) gedreht werden, um die an der Stütze 45 befestigten Zahnräder 50 herum. (In der Zeichnung ist die Bewegungsbahn der Zahnräder 49 durch gestrichelte Linien gezeigt). Dabei wird durch das Zahnrad 49, das über die Freilaufkupplung 48 (Fig. 10) mit der Welle des Läufers des elektrischen Generators 47 gekuppelt ist, dieser in Drehung versetzt, so daß elektrischer Strom erzeugt wird. Nachher werden die elektrischen Generatoren 47 zusammen mit der Stütze 45 auf die Verschiebungsbegrenzer 51 nach oben bewegt und behalten dabei ihre horizontale Lage bei. In diesem Fall wird das getriebene Zahnrad 49 (Fig. 11) nicht gedreht, und die Freilaufkupplung 48 (Fig. 10) geht mit dem Läufer des elektrischen Generator 47 außer Eingriff. Dadurch, daß die Begrenzer 51 (Fig. 9) an den vertikalen Führungen 10 angebracht sind, wird die Hubhöhe und die Höhe des freien Falls der elektrischen Generatoren 47 (Unwuchten) begrenzt, und die Auswahl dieser Höhe wird durch die Anpassung der Zeit für das Bewegen der elektrischen Generatoren 47 (Unwuchten) über die vorgegebene Bewegungsbahn innerhalb eines Zyklus an die Schwingungsfrequenz des Schwimmittels 1 auf der Welle bestimmt, wobei bei Abnahme der Schwingungsfrequenz des Schwimmittels 1 auf der Welle die Hubhöhe der Stütze 45 des Schwingungserzeugers vergrößert und bei Zunahme der Schwingungsfrequenz vermindert wird (es handelt sich um eine steuerbare dynamische Resonanz). Sobald die bewegliche Stütze 45 die Begrenzer 51 der Verschiebung der Stütze erreicht hat, werden die elektrischen Generatoren 47 (Unwuchten) durch eine Restenergie um die Achsen der Lenker 46 (Fig. 10) um 180° gedreht, und bei maximaler Entfernung der elektrischen Generatoren 47 (Unwuchten) voneinander beginnen sie sich wieder abwärtszubewegen.

Also gestatten die Wellenkraftanlagen zur Durchführung des Verfahrens zur Umwandlung der Energie von Wellen es:

- die Führungen 10 zur Hin- und Herbewegung des Schwingungserzeugers in der vertikalen Ebene zu verwenden, was zu einer zusätzlichen Energiespeicherung in den elektrischen Generatoren (Unwuchten) beiträgt;
- durch den Begrenzer 51 der Verschiebung der Stütze mit der Vorrichtung 53 zur Verriegelung die Stütze 45 mit den elektrischen Generatoren 47 in der vorgegebenen Höhe H anzuordnen und damit eine maximale Energieentnahme zu gewährleisten;
- die elektrischen Generatoren 47 als Unwuchten des Schwingungserzeugers zu benutzen, welche zur Vereinfachung der Bauart und zur Verminderung der Masse der Wellenkraftanlage führen, sowie zusätzliche, zur Erhöhung der Drehzahl des Läufers elektrischer Generatoren notwendige Vorrichtungen wie z.B. Untersetzungsgetriebe, Multiplikatoren u.dgl. auszuschließen.

Es muß beachtet werden, daß beim Einsatz von leistungsstarken Wellenkraftanlagen mit einer großen Masse der Unwuchten zur Stabilisierung derselben in der horizontalen Lage bei deren Fallen von einer Höhe an den vertikalen Führungen Feststeller der horizontalen Lage der Unwuchten vorgesehen werden. Bei der Betrachtung der Ausführungsformen der Anlagen sind diese Feststeller der Einfachheit halber nicht gezeigt.

Somit bieten das erfindungsgemäße Verfahren zur Umwandlung der Energie von Wellen und die Wellenkraftanlagen zu seiner Durchführung die Möglichkeit, die Energie von Seewellen in elektrische Energie mit einem hohen Wirkungsgrad wirksamer umzuwandeln. Die erfindungsgemäß vorgeschlagene Wellenkraftanlage ist ökologisch rein, bewirkt keine zusätzliche thermische Erwärmung der Atmosphäre und keine Verunreinigung der Gewässer des Planeten.

Durch die Erfindung können See- und ozeanische Wellenkraftwerke großer Leistung unter Übertragung von Elektroenergie auf die Küste oder unter Ausnutzung derselben zur Stromversorgung energieintensiver Produktionen in Seebetrieben (z.B. zur Erzeugung von Wasserstoff, Methanol, hoch reinen Metallen oder zur Herstellung von erschmolzenen Salzen (Elektrolythen), Lithiumhalogeniden) geschaffen werden.

Die erfindungsgemäßen Wellenkraftanlagen großer Leistung können als Kraftanlagen für Schiffsantriebe benutzt werden.

Gewerbliche Anwendbarkeit

Die Erfindung kann auf allen Schiffsarten sowie auf besonders entwickelten Schwimmitteln beliebiger Wasserverdrängung und Klasse zur Energieerzeugung durch Seewellen in einem weiten Bereich ihrer Frequenzen Anwendung finden.

**Patentansprüche**

1. Verfahren zur Umwandlung der Energie von Wellen mit Hilfe eines auf einem Schwimmittel (1) angeordneten Schwingungserzeugers (2) mit mindestens einer Unwucht (3, 13, 32), die auf einer Achse (4, 12, 31 ) sitzt und um diese drehbar ist, bei welchem Verfahren die Energiespeicherung durch die Unwucht (3, 13, 32) und die Energieentnahme auf der Unwucht (3, 13,32) in der Hebeperiode des Schwimmittels (1) auf der Welle erfolgt, dadurch gekennzeichnet, daß die Achse (4, 12,31) mit der Unwucht (3, 13, 32) über dem Schwimmittel (1) auf eine vorgegebene Höhe (H) gehoben wird, von der der freie Fall der Achse (4,12,31) samt der Unwucht (3,13,32) gewährleistet wird, bis die Achse (4,12,31) mit dem Schwimmittel (1) bei der zum Schwimmittel (1) horizontalen Lage der Unwucht (3,13,32) in Berührung kommt, und durch die Unwucht (3,13,32) eine Energie gespeichert wird, worauf bei Drehung der Unwucht (3,13,32) um ihre Achse (4,12,31) um 180° und bei anschließendem Heben der Achse (4,12,31) samt der Unwucht (3,13,32) bei horizontaler Lage der letzteren die Energieentnahme durchgeführt wird, wobei der freie Fall der Achse (4,12,31) mit der Unwucht (3,13,32) bis zur Berührung derselben mit dem Schwimmittel (1) und die Drehung der Unwucht (3,13,32) in der Hebeperiode des Schwimmittels (1) auf der Welle erfolgt, indem bei Drehung der Unwucht (3,13,32) die Summierung der von der Unwucht (3,13,32) bei deren freiem Fall und Drehung aufgespeicherten Energie mit einer Wellenenergie, die über das Schwimmittel (1) auf die Unwucht (3, 13,32) übertragen wird, gesichert wird, und daß das Heben der Achse (4,12,31) samt der Unwucht (3,13,32) auf die vorgegebene Höhe und das Bringen der Unwucht (3,13,32) in die Ausgangslage in der Senkperiode des Schwimmittels (1) auf der Welle vorgenommen wird, wobei bei Abnahme der Schwingungsfrequenz des Schwimmittels (1) auf der Welle die Hubhöhe (H) der Achse (4,12,31) mit Unwucht (3,13,32) vergrößert und bei Zunahme der Schwingungsfrequenz vermindert wird.

2. Verfahren zur Umwandlung der Energie von Wellen nach Anspruch 1, dadurch gekennzeichnet, daß bei Unterbringung zweier Unwuchten (13,32) von im wesentlichen gleicher Masse im Schwingungserzeuger der freie Fall, die Drehung derselben um 180° um die Achse (12,31) und deren Heben auf die vorgegebene Höhe (H) in Gegenphase vorgenommen wird.

3. Verfahren zur Umwandlung der Energie von Wellen nach Anspruch 1, dadurch gekennzeichnet, daß bei Unterbringung dreier Unwuchten im Schwingungserzeuger, bei denen die Masse zweier von ihnen der Masse der dritten Unwucht im wesentlichen gleich ist, der freie Fall, die Drehung und das Heben auf die vorgegebene Höhe der Unwucht mit größerer Masse in Gegenphase zu den zwei anderen Unwuchten durchgeführt wird.

4. Wellenkraftanlage zur Durchführung des Verfahrens zur Umwandlung der Energie von Wellen, welche ein in schwimmendem Zustand befindliches, unter der Wirkung von Wellen schlingerndes Schwimmittel (1), ein am Schwimmittel (1) befestigtes Hohlgehäuse (9,25,44), in dem ein Schwingungserzeuger mit Unwuchten (3,13,32) untergebracht ist, einen elektrischen Generator (29,47), der die Energieentnahme von den Unwuchten (3,13,32) gewährleistet, und einen Geber (22,39,54) für Massenkräfte enthält, dadurch gekennzeichnet, daß im Hohlgehäuse (9,25,44) mindestens zwei vertikale Führungen (10) angeordnet sind, und der Schwingungserzeuger eine Stütze (11,30,45) darstellt, an der die Unwuchten (3,13,32) um eine Achse (4,12,31) drehbar angebracht sind, wobei die Stütze (11,30,45) an den vertikalen Führungen (10) mit Möglichkeit einer hin- und hergehenden Bewegung über die letzteren eingebaut ist, sowie daß die Anlage im Oberteil der Führungen mit einer Vorrichtung (21,38,53) zur Verriegelung und Begrenzung der Verschiebung der Stütze versehen ist, welche über eine Steuerverbindung mit dem Massenkraftgeber (22,39,54) verbunden ist.

5. Wellenkraftanlage nach Anspruch 4, dadurch gekennzeichnet, daß im Schwingungserzeuger der Wellenkraftanlage auf einer gemeinsamen Achse (12), die an der Stütze (11) befestigt ist, eine gerade Anzahl von Unwuchten (13) mit Möglichkeit einer Drehung um diese Achse (12) angebracht ist und daß im Bodenteil des Hohlgehäuses (9) eine unbewegliche Stütze (18), die als hohler Halbzylinder ausgebildet ist, dessen Hohlraum (C) den Unwuchten (13) zugewandt ist, angeordnet ist und als Ständer (17) des elektrischen Generators dient, wobei als Läufer des letzteren die Unwuchten (13) des Schwingungserzeugers benutzt werden, die bei ihrer Drehung an den Hohlraum (C) des hohlen Halbzylinders der unbeweglichen Stütze (18) unter Belassung eines minimalen Spaltes angepaßt werden.

6. Wellenkraftanlage nach Anspruch 4, dadurch gekennzeichnet, daß im Schwingungserzeuger auf einer gemeinsamen Achse (31), die an der Stütze (30) befestigt ist, eine gerade Anzahl von Unwuchten (32) mit Möglichkeit einer Drehung um diese Achse (31) angebracht ist und daß im Hohlgehäuse (25) zwischen den vertikelen Führungen (10) parallel zu diesen eine zur Energieentnahme dienende Welle (26) mit Längsschlitzen (27) eingebaut, durch die Stütze (30) des Schwingungserzeugers hindurchgeführt und über eine Freilaufkupplung (28) mit dem elektrischen Generator (29) verbunden ist, wobei auf den Unwuchten (32) des Schwingungserzeuges Zahnkränze (33) ausgeführt sind, die über ein Zahnrad (35) mit den Längsschlitzen (27) der zur Energieentnahme dienenden Welle (26) kinematisch gekuppelt sind, wodurch die Drehung der Unwuchten (32) in Gegenphase gewährleistet ist.

7. Wellenkraftanlage nach Anspruch 4, dadurch gekennzeichnet, daß im Schwingungserzeuger als Unwuchten elektrische Generatoren (47) benutzt sind, die an zwei Lenkern (46) um die Achsen der letzteren herum drehbar angebracht sind, wobei die Längsachsen der an der Stütze (45) befestigten Lenker (46) parallel zueinander und zur Längsachse der Stütze (45) sind, wobei an den Ausgangswellen der Läufer der elektrischen Generatoren Freilaufkupplungen (48) und getriebene Zahnräder (49) eingebaut sind, und daß die letzteren mit den an der Stütze (45) des Schwingungserzeugers befestigten Zahnrädern (50) verbunden sind.

8. Wellenkraftanlage nach Anspruch 7, dadurch gekennzeichnet, daß sie mit einem Synchronisationsmechanismus (57) versehen ist, der als Kurbeltrieb ausgebildet ist und die Lenker (46) miteinander verbindet.

9. Wellenkraftanlage nach Anspruch 7, dadurch gekennzeichnet, daß sie mit einem Synchronisationsmechanismus (57) versehen ist, der als Zahnradgetriebe ausgebildet ist und die Lenker (46) miteinander verbindet.

10. Wellenkraftanlage nach Anspruch 4, dadurch gekennzeichnet, daß sie mit einem Höhenbegrenzer (19,36,51) der Verschiebung der Stütze des Schwingungserzeugers versehen ist, der mit der Vorrichtung (21,38,53) zur Verriegelung und Begrenzung der Verschiebung der Stütze über eine kinematische Verbindung, z.B. ein Schraubengetriebe (20, 37,52), gekuppelt und an den vertikalen Führungen (10) angebracht ist.

## Claims

1. A method of wave energy conversion by a vibration generator (2) placed on a floating means (1) and equipped with at least one unbalanced weight (3,13,32) rotatably mounted on a shaft (4,12,31), **characterized** in that elevating the shaft (4,12,31) with the unbalanced weight (3,13,32) above the floating means (1) to a specific height (H) letting the shaft (4,12,31) with the unbalanced weight (3,13,32) fall freely from this height (H) till the contact with the floating means (1), the unbalanced weight (3,13,32) retaining its horizontal position with respect to the floating means (1), and letting the unbalanced weight (3,13,32) accumulate energy, taking energy off as the unbalanced weight (3,13,32) turns to 180° around the shaft (4,12,31) thereof and as the shaft (4,12,31) with the unbalanced weight (3,13,32) are elevated, the unbalanced weight (3,13,32) still being arranged horizontally, and in which case the free fall of the shaft (4,12,31) with the unbalanced weight (3,13,32) till the contact with the floating means (1) and the turn of the unbalanced weight (3,13,32) are performed as the floating means (1) rises with a wave, thus ensuring

**14**

that, during the turn of the unbalanced weight (3,13,32), the energy accumulated by the unbalanced weight (3,13,32) during its free fall and turn is summed up with the energy of the wave, transmitted via the floating means (1) to the unbalanced weight weight (3,13,32), the elevation of the shaft (4,12,31) with the unbalanced weight (3,13,32) to a specific height (H) and placing of the unbalanced weight (3,13,32) to its initial position are performed as the floating means (1) sinks with the wave, in case the fluctuation frequency of the floating means (1) diminishes, the height of elevation of the shaft (4,12,31) with the unbalanced weight (3,13,32) should be increased and visa versa.

2. A method for wave energy conversion as claimed in claim 1, **characterized** in that, in case two unbalanced weights (13,32) of substantially equal mass are provided in the vibration generator, their free fall, the 180° turn around the shaft (12,31), and the elevation to a specific height (H) are performed in antiphase.

3. A method of wave energy conversion as claimed in claim 1, **characterized** in that, in case three unbalanced weights are provided in the vibration generator, the mass of two unbalanced weights being equal to that of the third one, the free fall, the turn and elevation to a specific height of the heavier unbalanced weight are performed in antiphase with two other unbalanced weights.

4. A wave-operated power plant realizing the wave energy conversion method comprising a floating means (1) which is floating and rocked by waves, a hollow casing (9,25,44) secured on the floating means (1) accommodating a vibration generator (29,47) for taking energy off unbalanced weights (3,13,32) and a transducer of inertial forces (22,39,54), **characterized** in that the hollow casing (9,25,44) accommodates at least two vertical guides (10) and the vibration generator is a bearing (11,30,45) whereon unbalanced weight (3,13,32) are rotatably mounted on the shaft (4,12,31), said bearing (11,30,45) is arranged on vertical guides (10) for reciprocating motion thereon and besides that, the plant is provided with devices (21, 38,53) for clamping and locking the bearing, which are connected to and controlled by transducer (22,39,54) of inertial forces.

5. A wave-operated power plant as claimed in claim 4, **characterized** in that an even number of unbalanced weights (13) are rotatably installed in the vibration generator on one common shaft (12) secured on the bearing (11) and a stationary support (18) is mounted on the bottom of the hollow casing (9) and made as a hollow half-cylinder having its space (C) facing the unbalanced weights (13), said stationary support (18) being the stator (17) of the electric generator, while the rotor of the electric generator consists of the unbalanced weights (13) of the vibration generator, which are matched, as they turn, with the space (C) of the hollow half-cylinder of the stationary support (18) with a minimal gap.

6. A wave-operated power plant as claimed in claim 4, **characterized** in that an even number of unbalanced weights (32) are rotatably installed in the vibration generator on one common shaft (31) secured on the bearing (30) and an energy take-off shaft (26) featuring longitudinal spline grooves (27) is installed in the hollow casing (25) between and parallel to the vertical guides (10), which extends through the bearing (30) of the vibration generator and is connected via an overrunning clutch (28) to the electric generator (29), the unbalanced weights (32) of the vibration generator are provided with ring gears (33) kinematically connected, via a gear wheel (35), with the spline grooves (27) of the shaft (26), thus ensuring the antiphase turn of the unbalanced weights (32).

7. A wave-operated power plant as claimed in claim 4, **characterized** in that the unbalanced weights of the vibration generator are the electric generators (47) rotatably installed on two carriers (46), the longitudinal axes of these carriers (46) secured on the bearing (45) are parallel to each other and to the longitudinal axis of the bearing (45), the output shafts of the electric generators carry overrunning clutches (48) and driven gear wheels (49), the latter being kinematically connected to gear wheels (50) secured on the bearing (45) of the vibration generator.

8. A wave-operated power plant as claimed in claim 7, **characterized** in that it is provided with a synchronizing mechanism (57) which is a crank mechanism connecting carriers (46) to each other.

9. A wave-operated power plant as claimed in claim 7, **characterized** in that it is provided with a synchronizing mechanism (57) which is a geared transmission connecting carriers (46) to each other.

10. A wave-operated power plant as claimed in claim 4, **characterized** in that it is provided with a limiter (19,36,51) of the height of the bearing of the vibration generator, which is connected kinematically, e.g.

by a helical transmission (20,37,52), with the clamping device (21,38,53) and installed on the vertical guides (10).

## Revendications

1. Procédé de conversion de l'énergie de vagues à l'aide d'un générateur (2) d'oscillations, installé sur un moyen flottant (1) et comportant au moins un balourd (3, 13, 32), monté sur un axe (4, 12, 31) avec possibilité de la rotation autour dudit axe (4, 12, 31) pendant laquelle l'énergie est accumulée par le balourd (3, 13, 32) et est cédée par ce balourd (3, 13, 32) pendant la montée du moyen flottant (1) sur une vague, **caractérisé** en ce qu'on lève l'axe (4, 12, 31) avec le balourd (3, 13, 32) au-dessus du moyen flottant (1) sur une hauteur prédéterminée (H), on assure la chute libre de l'axe (4, 12, 31) avec le balourd (3, 13, 32) de cette hauteur (H) jusqu'à ce que l'axe (4, 12, 31) touche le moyen flottant (1), le balourd (3, 13, 32) se trouvant en position horizontale par rapport au moyen flottant (1), et l'accumulation de l'énergie par le balourd (3, 13, 32), qu'ensuite, le balourd (3, 13, 32) étant tourné autour de son axe (4, 12, 31) de 180°, pendant la monté ultérieure de l'axe (4, 12, 31) avec le balourd (3, 13, 32) se trouvant en position horizontale, on prelève de l'énergie du balourd qui on effectue la chute libre de l'axe (4, 12, 31) avec le balourd (3, 13, 32) jusqu'à ce qu'il touche le moyen flottant (1) et la rotation du balourd (3, 13, 32) pendant la période de la montée du moyen flottant (1) sur une vague en assurant, au moment où le balourd (3, 13, 32) tourne, l'addition de l'énergie accumulée par le balourd (3, 13, 32) pendant sa chute libre et la rotation à l'énergie de la vague transmise, par l'intermédiaire du moyen flottant (1), au balourd (3, 13, 32), et on effectue la montée de l'axe (4, 12, 31) avec le balourd (3, 13, 32) sur la hauteur prédeterminée (H) et la mise du bolourd (3, 13, 32) à la position de départ pendant la descente du moyen flottant (1) sur une vague, en ce qu'on augmente la hauteur (H) de la montée de l'axe (4, 12, 31) avec le balourd (3, 13, 32) lorsque la fréquence d'oscillations du moyen flottant (1) sur les vagues diminue et on diminue ladite hauteur (H) lorsque la fréquence d'oscillations croît.

2. Procédé de conversion de l'énergie de vagues selon la revendication 1, **caractérisé** en ce que dans le cas où le générateur d'oscillations comporte deux balourds (13, 32), dont les masses sont sensiblement égales, la chute libre des balours, leur rotation de 180° autour de l'axe (12, 31) et la montée sur la hauteur prédéterminée (H) sont effectués en contre-phase.

3. Procédé de conversion de l'énergie de vagues selon la revendication 1, **caractérisé** en ce que dans le cas où dans le générateur d'oscillations, comporte trois balourds, la masse de deux des trois balourds étant sensiblement égale à celle du troisième balourd, la chute libre, la rotation et la montée du balourd ayant plus grande masse à une hauteur imposée sont réalisées en contre-phase avec les autres balourds.

4. Centrale énergétique de conversion de l'énergie de vagues mettant en oeuvre le procédé de conversion de l'énergie de vagues comportant un moyen flottant (1) se trouvant à flot et balotté par des vagues, un corps creux (9, 25, 44) fixé sur le moyen flottant à l'intérieur duquel il est monté un générateur d'oscillations comportant des balourds (3, 13, 32), un générateur électrique (29, 47), qui assure le prelèvement de l'énergie aux balourds (3, 13, 32), et un capteur de forces d'inertie (22, 39, 54), **caractérisée** en ce que dans le corps creux (9, 25, 44) sont montés au moins deux guides verticaux (10) et en ce que le générateur d'oscillations est constitué d'un appui (11, 30, 45) auquel sont montés, avec possibilité de tourner autour d'un axe (4, 12, 31), les balourds (3, 13, 32), que l'appui susmentionné (11, 30, 45) est monté sur les guides verticaux (10) de façon à pouvoir effectuer un déplacement de va-et-vient suivant ceux-ci, et que de plus, la centrale est munie d'un mécanisme (21, 38, 53) de fixation et de limitation du déplacement de l'appui, lié par un couplage de commande à un capteur (22, 39, 54) de forces d'inertie .

5. Centrale énergétique de conversion de l'énergie des vagues selon la revendication 4, **caractérisée** en ce qu'on a monté, dans le générateur d'oscillations, sur un axe commun (12), fixé à l'appui (11), un nombre pair de balourds (13) pouvant tourner autour de cet axe (12), qu'on a monté, dans la partie de fond du corps (9), un appui fixe (18), qui est constitué d'un demi-cylindre creux (8), dont la cavité (C) est orientée vers les balourds (13), et fait office du stator (17) du générateur électrique, et que les balourds (15) du générateur d'oscillations, qui sont associés pendant leur rotation à la cavité (C) du demi-cylindre creux de l'appui fixe (18) avec un jeu minimal, sont utilisés en qualité du rotor du générateur électrique.

6. Centrale énergétique de conversion de l'énergie de vagues selon la revendication 4, **caractérisée** en ce que dans le générateur d'oscillations, sur un axe commun (31) fixé sur l'appui (30), un nombre pair de balourds (32) sont montés avec possibilité de tourner autour dudit axe (31) et dans le corps creux (25), entre les guides verticaux (10) et parallèlement à ceux-ci, un arbre (26) est monté destiné à prelever l'énergie, possédant des cannelures (27), engagé à travers l'appui (30) du générateur d'oscillations et lié par l'intermédiaire d'une roue libre au générateur électrique (29), en ce que des couronnes dentées (33) sont prévues sur les balourds (32) du générateur d'oscillations et sont liées cinématiquement par un pignon (35) aux cannelures (27) de l'arbre (26) pour le prelèvement de l'énergie, en assurant la rotation des balourds (32) en contre-phase.

7. Centrale énergétique de conversion de l'énergie de vagues, selon la revendication 4, **caractérisée** en ce que, dans le générateur d'oscillations, des générateurs électriques (47) sont utilisés en tant que balourds et sont montés sur deux éléments entraîneurs (46) avec possibilité de tourner autour des axes de ces éléments entraîneurs (46), les axes longitudinaux des éléments entraîneurs (46), fixés sur un appui (45) étant parallèles l'un à l'autre et à l'axe longitudinal de l'appui (45), sur les arbres de sortie des rotors des générateurs électriques sont montés une roue libre (48) et des pignons menés (49), ces derniers étant liés cinématiquement à des pignons (50) fixés sur l'appui (45) du générateur d'oscillations.

8. Centrale énergétique de conversion de l'énergie de vagues selon la revendication 7, **caractérisée** en ce qu'elle est munie d'un mécanisme (57) de synchronisation réalisé sous la forme d'un ensemble bielle-manivelle qui relie les éléments entraîneurs (46) l'un à l'autre.

9. Centrale énergétique de conversion de l'énergie de vagues, selon la revendication 7, **caractérisée** en ce qu'elle est pourvue d'un mécanisme de synchronisation (57) réalisé sous la forme d'une transmission par engrenages qui relie les éléments entraîneurs (46) l'un à l'autre.

10. Centrale énergétique de conversion de l'énergie de vagues, selon la revendication 4, **caractérisée** en ce qu'elle est munie d'un limiteur (19, 36, 51) de la hauteur du déplacement de l'appui du générateur d'oscillations, lié au mécanisme (21, 38, 53) de fixation et de limitation du déplacément de l'appui par une chaîne cinématique, par exemple, par une transmission par vis et écrou (20, 37, 32) et monté sur les guides verticaux (10).

FIG.1

FIG.2

FIG. 3

FIG.4

FIG.5

FIG.6

*32*

*VIII*

*VIII*

*FIG.7*

*31*

*33*

*35*

*33*

*27*

*34*

*FIG.8*

FIG.9

FIG.10

FIG. 11